(19) Europäisches Patentamt
European Patent Office
Office européen des brevets

(11) **EP 2 858 358 B1**

(12) **EUROPÄISCHE PATENTSCHRIFT**

(45) Veröffentlichungstag und Bekanntmachung des Hinweises auf die Patenterteilung:
**27.04.2016   Patentblatt 2016/17**

(51) Int Cl.:
**H04N 9/31** *(2006.01)*        *H04N 13/04* *(2006.01)*

(21) Anmeldenummer: **13186948.9**

(22) Anmeldetag: **01.10.2013**

(54) **Anzeigevorrichtung und Kalibrierungsverfahren hierfür**

Display device and calibration method for the same

Dispositif d'affichage et procédé d'étalonnage correspondant

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**08.04.2015   Patentblatt 2015/15**

(73) Patentinhaber: **Trilite Technologies GmbH**
**7343 Neutal (AT)**

(72) Erfinder:
• **Reitterer, Joerg**
  **1230 Wien (AT)**

• **Fidler, Franz**
  **1100 Wien (AT)**

(74) Vertreter: **Weiser, Andreas**
**Patentanwalt**
**Kopfgasse 7**
**1130 Wien (AT)**

(56) Entgegenhaltungen:
WO-A1-2012/113856        US-A1- 2004 119 004
US-A1- 2009 315 925      US-A1- 2010 079 683
US-A1- 2010 283 413

## Beschreibung

Die vorliegende Erfindung betrifft eine Anzeige- oder Projektionsvorrichtung mit einer Vielzahl von Leuchtmodulen gemäß dem Oberbegriff des Anspruchs 1. Die Erfindung betrifft ferner ein Verfahren zur Kalibrierung einer solchen Anzeige- oder Projektionsvorrichtung.

Ein Leuchtmodul gemäß dem Oberbegriff des Anspruchs 1 ist aus der US 2004/0119004 A1 bekannt.

Anzeige- und Projektionsvorrichtungen basierend auf der Ablenkung von emittierten Lichtstrahlen in spezifische Richtungen können z.B. als autostereoskopische Displays eingesetzt werden. Solche Displays erzeugen Bilder, die von einem Betrachter ohne die Hilfe einer 3D-Brille als dreidimensional wahrgenommen werden. Diese Technologie beruht darauf, dass die Bildpunkte des Displays in bestimmte Richtungen verschiedene Bilder projizieren, und somit dem linken und dem rechten Auge ein jeweils anderes Bild zugeführt wird. Dieses Verfahren ist durch starre Linsensysteme bereits großräumig umgesetzt worden. Ein neuer Ansatz besteht darin, dass die Ablenkung der Bilder in die verschiedenen Raumrichtungen über eine Vielzahl individuell beweglicher Mikrospiegel erfolgt und das jeweilige Bild nur in entsprechenden Phasen der Spiegelbewegungen auf diese projiziert wird.

Die US 2009/0315925 A1 offenbart ein Leuchtmodul zur Projektion eines Bilds in ein Auge mittels eines um zwei Achsen schwingenden Spiegels. Das Leuchtmodul ist mit einer Taktanpassung ausgestattet, um die Sinusschwingung des Spiegels auszugleichen. Ferner verfügt das Leuchtmodul über einen Steuereingang, über welchen ein Benutzer einen Wert zum Verändern der Größe des Bilds eingeben kann.

Die US 2010/0283413 A1 beschreibt ein Leuchtmodul, das einen Laserstrahl mittels eines schwingenden Spiegels ablenkt. Um die unregelmäßigen Pixelabstände auf einer Projektionsebene auszugleichen, werden die Ausgabezeiten der Pixel mit größerer Winkelablenkung des Spiegels verlängert.

Wenn ein Lichtstrahl von einem sich periodisch um eine Schwingachse schwingenden Spiegel abgelenkt wird, soll der projizierte Lichtstrahl allen Betrachtern in einer bestimmten Entfernung vom Display gleichermaßen Informationen zukommen lassen. Dies ist in der Regel jedoch nicht der Fall, da sich beim Schwingen des Spiegels um eine Schwingachse ein nicht-linearer Zusammenhang zwischen der Winkelfunktion der Schwingbewegung des Spiegels und der Ortsfunktion der projizierten Lichtstrahlen in der Ebene der Betrachter ergibt. Dazu kommen noch Fertigungstoleranzen, Imperfektionen und Fehljustierungen des Displays bzw. dessen Elementen.

Ein weiteres Problem besteht darin, dass herkömmliche autostereoskopische Displays, die auf einen optimalen Betrachtungsabstand des Betrachters vom Display eingestellt worden sind, nicht auf einen anderen optimalen Betrachtungsabstand einstellbar sind und daher nicht flexibel eingesetzt werden können.

Die Erfindung setzt sich zum Ziel, diese Probleme zu lösen und Anzeige- und Projektionsvorrichtungen für Videosignale sowie Verfahren zu deren Kalibrierung zu schaffen.

Gemäß einem ersten Aspekt der Erfindung wird das Ziel mit einer Anzeige- oder Projektionsvorrichtung gemäß den Merkmalen des Anspruchs 1 erreicht.

Die erfindungsgemäße Anzeige- oder Projektionsvorrichtung kann z.B. ein autostereoskopisches Display oder eine 3D-Projektionsvorrichtung bilden. Die Erfindung schafft dabei eine Anzeige- oder Projektionsvorrichtung bzw. ein Display, die bzw. das die Abbildungsfunktionen aller Leuchtmodule an eine Zielentfernung anpassen kann und so jederzeit auf einen von der Kalibrierungsentfernung verschiedenen gewünschten Betrachtungsabstand eingestellt werden kann.

Für ein Leuchtmodul ist eine Funktion im Leuchtmodul eingespeichert, welche das eingehende Videosignal vor der Aussendung eines Lichtimpulses und dessen Ablenkung in der Zeitachse "vorverzerrt". Dadurch können durch die Schwingbewegung des Spiegels bewirkte Nichtlinearitäten der Abbildung der abgelenkten Lichtimpulse auf eine Ebene, Abhängigkeiten der Abbildung von der Position des Leuchtmoduls im Display, sowie allfällige Fertigungstoleranzen und Imperfektionen des Spiegels, seines Antriebs und des Leuchtelements, Fehljustierungen, wie z.B. Winkelfehler des Trägers auf seinem Untergrund, des Spiegels und des Leuchtelements zum Träger, od.dgl. ausgeglichen und das Leuchtmodul entsprechend optimal kalibriert werden. Der Steuereingang ermöglicht dabei zum Skalieren bzw. Offsetverändern der gespeicherten Abbildungsfunktion eine einfache, dynamische Veränderung der Zeitverzerrungsfunktion des Leuchtmoduls. Wie im Anschluss noch ausführlich erörtert, können auf diese Weise viele Leuchtmodule, die gemeinsam ein autostereoskopisches Display bilden, gemeinsam in ihren Abbildungsfunktionen verstellt bzw. kalibriert werden.

Die in der Recheneinheit gespeicherte Zeitverzerrungsfunktion kann beispielsweise als analytische (Hardware- oder Software-) Funktion implementiert werden, z.B. näherungsweise als Fourierreihe in einem Schaltblock oder Softwaremodul der Recheneinheit. Bevorzugt wird die Abbildungsfunktion jedoch durch eine in der Recheneinheit gespeicherte Zuordnungstabelle mit einer Vielzahl von Einträgen implementiert, die jeweils eine Zuordnung zwischen einem ersten und einem zweiten Zeitpunkt enthalten. Dies ermöglicht eine einfachere, aber auch genauere Umsetzung der Abbildungsfunktion, da der Abtasttakt des Videosignals bekannt ist und dadurch für jeden Abtastwert innerhalb einer Spiegelperiode ein Eintrag mit einem zweiten Zeitpunkt, auf den abgebildet werden soll, angelegt werden kann. Zusätzlich kann jeder Eintrag der Zuordnungstabelle einzeln geändert werden, was bei einer stetigen Funktion, wie einer oben erwähnten Fourierreihe, nicht möglich ist.

In einer bevorzugten Ausführungsform umfasst das Leuchtelement mindestens eine Leucht- oder Laserdiode, bevorzugt drei Leucht- oder Laserdioden mit unterschiedlichen Primärfarben. Leuchtdioden (LEDs) oder Laserdioden (LDs) haben besonders bevorzugte Eigenschaften, wie ein definiertes Farbspektrum, kleine Bauform, hohe Lichtausbeute, Möglichkeit zur starken Strahlbündelung durch optische Komponenten mit einer kompakten Baugröße, etc. Durch den Einsatz von drei Leucht- oder Laserdioden mit Primärfarben kann eine gezielte Farbmischung zum Aufbau von Farb-3D-Displays bzw. -Projektoren erreicht werden. Dabei kann das Leuchtmodul für jede Leucht- oder Laserdiode der Leuchteinheit sowohl einen eigenen als auch einen gemeinsamen Spiegel zur Ablenkung der emittierten Lichtstrahlen haben.

Bevorzugt ist am Träger eine Optik angeordnet, welche einen vom Leuchtelement emittierten Lichtimpuls zu einem Lichtfächer in einer zur Schwingachse des Spiegels parallelen Ebene formt. Ein divergierendes Lichtsignal kann so z.B. zu einem Lichtfächer kollimiert werden bzw. ein Lichtstrahl zu einem Lichtfächer aufgefächert werden. Wenn ein Betrachter in einem Zuschauerbereich einen nicht-aufgefächerten Lichtstrahl mit dem linken und einen mit dem rechten Auge empfangen will, sollte er sich immer auf der selben Höhe befinden. Somit können sowohl kleinere als auch größere Betrachter das Lichtsignal gleichermaßen empfangen bzw. wird die Bewegungsfreiheit des Betrachters in vertikaler Richtung nicht eingeschränkt.

Weiters bevorzugt ist der Spiegel als MEMS (micro electromechanical system) Spiegel ausgebildet. Dies ermöglicht eine größtmögliche Miniaturisierung des Leuchtmoduls und dadurch den Aufbau eines 3D-Displays bzw. -Projektors aus einer Vielzahl von Leuchtmodulen, d.h. eine hohe räumliche Dichte an Bildpunkten (Pixeln).

Bevorzugt sind die Leuchtmodule in dem genannten Array in regelmäßigen Abständen in Zeilen und Spalten angeordnet, wie in der Technik bekannt; dies ermöglicht eine einfache Aufbereitung des Videosignals für anzuzeigende bzw. zu projizierende Bilder.

Es sei jedoch erwähnt, dass die hier vorgestellten Leuchtmodule und Projektionsvorrichtungen auch für andere Zwecke als stereoskopische Displays geeignet sind, z.B. zum Aufbau richtungsabhängiger Displays, welche abhängig von der Position des Betrachters unterschiedliche Inhalte anzeigen ("Multi-Content"), oder zum Aufbau richtungsabhängiger steuerbarer Beleuchtungseinrichtungen, welche Licht in ausgewählte Richtungen projizieren, z.B. zum Aufbau von steuerbaren Autoscheinwerfern mit richtungsabhängigen Leuchtreflektoren für z.B. adaptives Kurvenlicht.

Bevorzugt zeichnet sich die obengenannte Anzeige- oder Projektionsvorrichtung für ein Videosignal, das zumindest zwei Bildkanäle umfasst, dadurch aus, dass den Leuchtmodulen ein Demultiplexer vorgeschaltet ist, welcher dafür ausgebildet ist, innerhalb einer Spiegelperiode jedem Leuchtmodul für dieses Leuchtmodul bestimmte Anteile aus verschiedenen Bildkanälen in einer vorgegebenen Sequenz zuzuführen.

Dadurch kann dem Display ein gemeinsames Videosignal zugeführt werden, welches mehrere (zumindest zwei) Bildkanäle pro Leuchtmodul enthält. Mit zwei Bildkanälen können zwei Betrachtungszonen ("Viewing Zones"), eine für das linke Auge und eine für das rechte Auge, errichtet werden, welche sich über den Zuschauerraum auch periodisch wiederholen können. Mit mehr als zwei Bildkanälen können sich periodisch wiederholende Sequenzen von mehreren Betrachtungszonen quer über den Zuschauerraum erstellt werden, wobei eine Sequenz von Bildkanälen z.B. aufeinanderfolgende Blickwinkel auf eine 3D-Szene enthält, wie in der Technik bekannt. Das Videosignal kann die einzelnen Bildkanäle pro Leuchtmodul, bzw. die einzelnen Leuchtmodule pro Bildkanal, z.B. in beliebigem Zeitmultiplex enthalten und der Demultiplexer das Videosignal entsprechend demultiplexen, um es den einzelnen Leuchtmodulen zeitrichtig zuzuführen.

In einem zweiten Aspekt schafft die Erfindung ein Verfahren zur Kalibrierung einer Anzeige- oder Projektionsvorrichtung mit den Merkmalen des Anspruchs 6.

Die Hardware-Übertragungskennlinie des gesamten Abbildungssystems des Leuchtmoduls aus Träger, Leuchtmodul, Spiegel und Projektions- bzw. Messposition wird so punktweise ausgemessen und - durch entsprechend umgekehrte Speicherung in der Zuordnungstabelle - damit gleichzeitig zu genau jener von der Zuordnungstabelle implementierten Abbildungsfunktion invertiert, um welche das Videosignal dann von der Recheneinheit zeitlich vorverzerrt wird.

Das Verfahren der Erfindung erlaubt damit eine rasche Kalibrierung des Leuchtmoduls durch direkte Erstellung bzw. Anpassung der Zuordnungstabelle an die individuellen Projektionseigenschaften des Leuchtelements, des Spiegels und deren Relativpositionen und Ausrichtungen gegenüber der Betrachtung- bzw. Projektionsebene. Gegenüber einer bloßen "Vor-Berechnung" der Zuordnungstabelle, z.B. zum Ausgleich lediglich der projektionswinkelabhängigen Tangens-Nichtlinearität des Systems, wozu die Abbildungsfunktion z.B. lediglich als Arcus-Tangens modelliert wird, hat dies den Vorteil, dass jedes Leuchtmodul individuell zur Kompensation seiner Fertigungs- und Montagetoleranzen kalibriert werden kann. Die Messung der Bahnposition des abgelenkten Lichtimpulses gibt Auskunft darüber, wie stark dieser von seiner idealen "Soll-Position" entfernt ist. Durch die bekannte Dauer der Schwingungsperiode des Spiegels und die bekannten Positionen des Lichtimpulses bei maximaler Spiegelauslenkung kann der gemessenen Bahnposition ein Zeitwert zugeordnet werden, der unmittelbar zur Aufstellung der Zuordnungstabelle, d.h. der Zeitverzerrung des Videosignals in der Recheneinheit des Leuchtmoduls, verwendet werden kann.

Die Bahn, auf der der Lichtimpuls gemessen wird, kann dabei beliebiger Art sein, wie später noch ausführlich erläutert wird, z.B. eine Gerade auf einem Schirm, auf den die Lichtimpulse projiziert werden, oder eine Trajektorie im Raum, entlang der eine Kamera bewegt wird, etc. Die Bahn sollte zweckmäßigerweise so verlaufen, dass sie von Lichtimpulsen aller möglichen Winkel, in denen diese vom Spiegel abgelenkt sein können, durchsetzt ist.

Bevorzugt wird in Schritt b) der Impuls repetitiv über mehrere Spiegelperioden jeweils zum genannten bekannten Zeitpunkt bezogen auf die jeweilige Spiegelperiode eingespeist. Bei Projektion der Lichtimpulse auf einen Schirm kann die Bahnposition der Lichtimpulse so z.B. mit freiem Auge erkannt und gemessen werden; bei Bewegung eines Lichtdetektors entlang der Bahn kann so sichergestellt werden, dass der Lichtdetektor zumindest einen der Lichtimpulse empfängt, wenn der Detektor deren Bahnposition passiert. Überdies kann gegebenenfalls ein Lichtimpuls nicht nur einmal gemessen werden, sondern so oft, bis ein ausreichend genaues Messresultat vorliegt, z.B. um Messfehler durch eine Vielzahl von Messungen auszugleichen.

In einer weiteren bevorzugten Ausführungsform der Erfindung werden weitere Einträge in der Zuordnungstabelle durch Interpolieren bestehender Einträge hinzugefügt. Da bei der Kalibrierung die elektrischen Impulse zwar in zeitlich diskreten Abständen zu bekannten Zeitpunkten in das Leuchtmodul eingespeist werden, die Lichtimpulse jedoch auf eine beliebige Bahnposition projiziert und diese Bahnposition in einem ersten Zeitpunkt eines Eintrags der Zuordnungstabelle umgerechnet wird, ist im anschließenden Betrieb des Leuchtmoduls eine direkte zeitliche Zuordnung eines zeitlich "vorzuverzerrenden" Abstandwerts des Eingangs-Videosignals zu einem ersten Zeitpunkt in der Zuordnungstabelle nicht immer möglich. Für diese Fälle ist es günstig, Zwischeneinträge in der Zuordnungstabelle durch Interpolieren zu erzeugen. Die Interpolation kann dabei sowohl im laufenden Betrieb in Echtzeit aus den bestehenden gespeicherten Einträgen durchgeführt werden als auch vorab, indem die Tabelle nach der Kalibrierungsphase mit Interpolationswerten aufgefüllt wird. Interpolierte Einträge können auch dann von Nutzen sein, wenn eine zu geringe Menge an Einträgen in der Zuordnungstabelle erstellt wurde, z.B. wenn Punkte nicht gemessen werden konnten.

In noch einer weiteren vorteilhaften Ausführungsform der Erfindung sind die bekannten Zeitpunkte der eingespeisten Impulse entsprechend der Abtastperiode des Videosignals zeitlich voneinander beabstandet und decken eine Spiegelperiode ab. Dadurch kann die gesamte Abbildungsfunktion des Leuchtmoduls in einem einzigen Durchgang erstellt werden, wobei optional durch Interpolationen wie oben beschrieben weitere Einträge berechnet werden können, um die zeitliche Auflösung der Zuordnungstabelle zu erhöhen.

In einer alternativen bevorzugten Ausführungsform sind die bekannten Zeitpunkte der eingespeisten Impulse innerhalb einer Spiegelperiode entsprechend einem Vielfachen der Abtastperiode des Videosignals zeitlich voneinander beabstandet, und das Verfahren wird unter Variieren der bekannten Zeitpunkte wiederholt, bis diese die Spiegelperiode entsprechend der Abtastrate des Videosignals abdecken. Bei dieser Variante wird durch "Interleaving" von jeweils geringfügig zeitlich versetzten Impulssätzen eine hohe zeitliche Auflösung der Abbildungsfunktion erreicht; dadurch können die zeitlichen Abstände der Impulse in einer Spiegelperiode groß bleiben, was die Erfassung ihrer Bahnpositionen erleichtert: Bei knapp beabstandeten Lichtimpulsen kann es sonst zu Überlappungen der Auftreffpunkte auf der Messbahn kommen, was eine genaue Vermessung der Bahnposition verhindert.

In einer ersten bevorzugten Variante der Erfindung erfolgt das Messen der Bahnposition in Schritt c) durch Projizieren des Lichtimpulses auf einen Schirm und Abmessen auf dem Schirm bezüglich einer etwa horizontal über den Schirm verlaufenden Bahn. Dies liefert eine einfache Methode, um das Projektionsmuster eines Leuchtmoduls auszumessen. Der Schirm kann dabei opak bzw. halb-transparent sein, um eine Auswertung von beiden Seiten des Schirmes zu ermöglichen. Die Auswertung des abgebildeten Musters kann sowohl mit freiem Auge und Messen mit einem Lineal auf den Schirm als auch mittels Fotografierens bzw. Filmens des Schirms mit einer Kamera und automatischer Bildverarbeitung des bzw. der Bilder der Kamera durchgeführt werden. Bei einer Vielzahl von Leuchtmodulen, z.B. bei einem Display, kann derselbe Schirm verwendet werden, um alle Leuchtmodule hintereinander zu kalibrieren.

In einer zweiten bevorzugten Variante der Erfindung erfolgt das Messen der Bahnposition in Schritt c) durch Bewegen eines Lichtdetektors entlang der Bahn und Messen des Detektionsorts des Lichtimpulses auf der Bahn. Dies hat den Vorteil, dass kein Schirm aufgestellt werden muss und eine Kalibrierung somit schnell und flexibel durchgeführt werden kann.

Überdies eröffnet die vorgenannte Ausführungsform der Impuls-Auftreffort-Messung gemäß einem vierten Aspekt der Erfindung ein Verfahren, um eine Anzeige- und Projektionsvorrichtung aus einer Vielzahl von Leuchtmodulen in einem einzigen Schritt zu kalibrieren, indem als Lichtdetektor eine Kamera verwendet wird, mittels welcher zu aufeinanderfolgenden Orten und Zeiten entlang der Bahn jeweils ein Bild aller Leuchtmodule aufgenommen wird. In den aufgenommenen Bildern können jeweils die Lichtimpulse aller Leuchtmodule detektiert werden, um jedes Leuchtmodul in der genannten Weise zu kalibrieren. Dadurch lassen sich die Zuordnungstabellen aller Leuchtmodule eines Displays in einem einzigen Kalibrierungsschritt, also gleichsam parallel, ermitteln. Die Kamera kann dabei beliebiger Art sein, z.B. auch lediglich eine Kamera eines Mobiltelefons, solange sie eine ausreichende Zeitauflösung für die aufgenommene Sequenz der Bilder und eine ausreichende Bildpunkt- bzw. Pixelauflösung zur Erkennung jedes einzelnen Leuchtmoduls in einem Bild aufweist.

Bevorzugt kann die Bahn mittels zumindest eines Referenz-Leuchtmoduls, das Lichtimpulse bekannter Position emittiert, auf diese referenziert werden. Dadurch kann die Ermittlung der Bahn ohne Hilfsmittel seitens der Kamera durchgeführt werden, und selbst das Display erfordert keine Veränderung, wenn eines oder mehrere seiner Leuchtmodule vorab als Referenz-Leuchtmodul z.B. kalibriert wurden. Alternativ kann ein gesondertes "Präzisions-Leuchtmodul" als Referenz-Leuchtmodul verwendet werden, das dazu ausgebildet ist, Lichtimpulse in exakt vorbestimmte Richtungen zu emittieren.

Gemäß einem weiteren bevorzugten Merkmal der Erfindung kann die Geschwindigkeit und/oder Beschleunigung der Kamera entlang der Bahn durch Vergleichen ihrer Bilder mit den Bildern einer weiteren Kamera bestimmt werden, die in einem festen Abstand an der erstgenannten Kamera montiert ist. Da die Bildaufnahmerate der Kamera bekannt ist, z.B. 25 Bilder pro Sekunde, kann durch Wiedererkennen eines von der ersten Kamera des Kamerapaares aufgenommenen Bildes in der Bildfolge der zweiten Kamera des Kamerapaares, wenn dieses entlang der Bahn bewegt wird und das Display aufnimmt, die lokale Bewegungsgeschwindigkeit ermittelt und so jedes Bild einer Bahnposition zugeordnet werden. Dies kann mit einer entsprechenden Bildverarbeitungssoftware zur automatischen Auswertung der Kamerabildsequenzen durchgeführt werden.

Noch eine weitere Möglichkeit ist, die Bahn mittels eines Inertialsensors und/oder einer Satellitennavigationseinrichtung des Lichtdetektors zu bestimmen. Dies ermöglicht eine genaue, direkte Zuordnung der aufgenommenen Bilder zu einem Ort, wobei Komponenten verwendet werden, wie sie beispielsweise bereits in modernen Smartphones verbaut sind und deren Kamera als Lichtdetektor verwendet werden kann.

Die verschiedenen bevorzugten Varianten der Bestimmung der Bahn, wie Inertialsensor, Satellitennavigationseinrichtung, Referenz-Leuchtmodul und Kamerapaar mit Bildauswertungssoftware, können auch miteinander kombiniert werden, um die Messgenauigkeit weiter zu erhöhen.

Die Erfindung wird nachfolgend anhand von in den beigeschlossenen Zeichnungen dargestellten Ausführungsbeispielen näher erläutert. In den Zeichnungen zeigen:

die Fig. 1 und 2 eine erfindungsgemäße Anzeige- oder Projektionsvorrichtung und deren Strahlengänge schematisch in einer Perspektivansicht (Fig. 1) und in einer Draufsicht (Fig. 2) ;

Fig. 3 ein Blockschaltbild eines einzelnen Leuchtmoduls einer Anzeige- oder Projektionsvorrichtung nach dem Stand der Technik;

Fig. 4 ein schematisches Impuls- und Strahlendiagramm des Leuchtmoduls von Fig. 3;

Fig. 5 ein Blockschaltbild einer erfindungsgemäßen Anzeige- oder Projektionsvorrichtung;

Fig. 6 Zeitdiagramme von Impulssignalen, die an verschiedenen Stellen in einem Leuchtmodul der Vorrichtung von Fig. 5 auftreten;

Fig. 7 die Abbildungsfunktion der Recheneinheit eines Leuchtmoduls der Vorrichtung von Fig. 5;

Fig. 8 eine in der Recheneinheit eines Leuchtmoduls gespeicherte Zuordnungstabelle zur Implementierung der Abbildungsfunktion von Fig. 7;

Fig. 9 den Schritt des Erstellens einer Abbildungsfunktion bzw. Zuordnungstabelle für das Leuchtmodul der Fig. 5 bis 8 im Rahmen des Kalibrierungsverfahrens der Erfindung;

Fig. 10 eine erste Ausführungsform des Kalibrierungsverfahrens der Erfindung anhand daran beteiligter Komponenten in einer schematischen Perspektivansicht;

Fig. 11 eine zweite Ausführungsform des Kalibrierungsverfahrens der Erfindung anhand daran beteiligter Komponenten in einer schematischen Perspektivansicht;

Fig. 12 den Schritt der Erzeugung von Kamerabildern des Verfahrens von Fig. 11;

Fig. 13 den Schritt der Zuordnung von Lichtimpuls-Aufnahmen auf der Kamerabewegungsbahn von Fig. 11 zu Zeitpunkten entsprechend Positionen in einem Zuschauerbereich; und

die Fig. 14 bis 16 drei verschiedene Varianten der Ermittlung der Bewegungsbahn des Lichtdetektors von Fig. 11 im Rahmen des erfindungsgemäßen Kalibrierungsverfahrens.

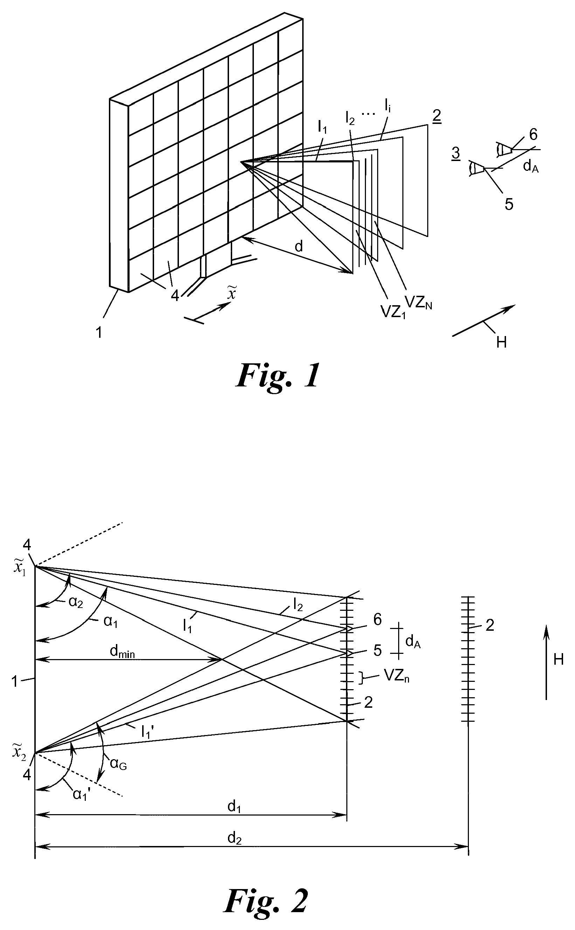

Fig. 1 zeigt eine Anzeige- oder Projektionsvorrichtung, ausgebildet als ein autostereoskopisches Display 1, das ein dreidimensionales Bild auf einen Zuschauerbereich 2 projiziert, in welchem sich ein Betrachter 3 befindet. Das Display 1 kann statt eines einzigen dreidimensionalen Bildes auch ein dreidimensionales Video durch eine Folge von dreidimensionalen Bildern erzeugen.

Das Display 1 umfasst eine Vielzahl von regelmäßig beabstandeten Leuchtmodulen 4, die z.B. in einem Array von 360 Zeilen und 672 Spalten angeordnet sind. Einem Leuchtmodul 4 ist jeweils eine Horizontalposition (Spaltenposition) $\tilde{x}$ am Display 1 zugeordnet, die von einem beliebigen Punkt des Displays 1 aus in eine Horizontalrichtung H ermittelt wird. Es versteht sich, dass das Display 1 eine beliebige Anzahl von Leuchtmodulen 4 in beliebiger Anordnung enthalten kann, auch in ganz geringer Anzahl bzw. Auflösung von z.B. 5x5 oder 10x10, um z.B. auch eine richtungswinkelabhängige Beleuchtungseinrichtung bilden zu können, z.B. ein adaptives Kurvenlicht für Fahrzeuge. Ein Leuchtmodul 4 im Array wird von einem Betrachter 3 jeweils als ein (Stereo-) Bildpunkt bzw. Pixel empfunden, wie im Folgenden erläutert.

Zu diesem Zweck ist jedes Leuchtmodul 4 dazu ausgebildet, mehrere Lichtstrahlen (Lichtimpulse) $I_1$, $I_2$, ..., allgemein $I_i$, unter verschiedenen Winkeln $\alpha_1$, $\alpha_2$, ..., allgemein $\alpha_i$, (Fig. 2) zu projizieren, die vom Display 1 und einer vertikalen Ebene, in der der Lichtstrahl $I_i$ liegt, eingeschlossen werden. Damit das Display 1 von Betrachtern 3 unterschiedlicher Körpergröße bzw. von unterschiedlichen Betrachtungsorten im Zuschauerbereich 2 betrachtet werden kann, können die Lichtimpulse $I_i$ wie dargestellt auch zu Lichtfächern, die in vertikalen Ebenen liegen, geformt werden; in weiterer Folge werden Lichtstrahlen und Lichtfächer gemeinsam als Lichtimpuls $I_i$ bezeichnet. So empfängt z.B. ein linkes Auge 5 des Betrachters 3 einen Lichtimpuls $I_1$ in einem Winkel $\alpha_1$ und ein rechtes Auge 6 einen anderen Lichtimpuls $I_2$ in einem Winkel $\alpha_2$ von ein und demselben Leuchtmodul 4 (Fig. 2). Durch die Gesamtheit der Leuchtmodule 4 empfängt das linke Auge 5 ein anderes zweidimensionales Bild vom Display 1 als das rechte Auge 6, wodurch der Betrachter 3 ein dreidimensionales Bild wahrnimmt.

In praktischen Ausführungsformen des Displays 1 projizieren die Leuchtmodule 4 jedoch nicht nur zwei verschiedene Bilder über ihren gesamten Ausstrahlwinkel $\alpha_G$, sondern eine Vielzahl verschiedener Bilder für Betrachtungszonen ("Viewing Zones") $VZ_1$, $VZ_2$, ..., $VZ_n$, ..., $VZ_N$, die sich in Horizontalrichtung H über den Ausstrahlwinkel $\alpha_G$ und den Zuschauerbereich 2 periodisch wiederholen. Eine Betrachtungszone $VZ_n$ kann dabei einen oder mehrere Lichtimpulse $I_i$ eines Leuchtmoduls 4 enthalten. So können bei einem typischen Augenabstand $d_A$ von 6,3 cm beispielsweise dreißig verschiedene Betrachtungszonen $VZ_1$, ..., $VZ_{30}$, d.h. dreißig als verschieden wahrnehmbare Bilder, über eine Horizontalerstreckung von 63,0 cm verteilt werden, wobei sich diese Folge von Betrachtungszonen $VZ_1$, ..., $VZ_{30}$ alle 63,0 cm wiederholt. In diesem Beispiel empfängt der Betrachter 3 z.B. mit dem linken Auge 5 die Betrachtungszone $VZ_1$ und mit dem rechten Auge 6 die Betrachtungszone $VZ_4$; bei einer kleinen Bewegung des Betrachters 3 nach rechts empfängt sein linkes Auge 5 z.B. die Betrachtungszone $VZ_2$ und sein rechtes Auge 6 die Betrachtungszone $VZ_5$, usw. usf. Wenn die Betrachtungszonen $VZ_1$, ..., $VZ_{30}$ eine 3D-Szene aus dreißig geringfügig verschiedenen Blickwinkeln darstellen, ergibt sich so eine realistische 3D-Wahrnehmung für den Betrachter 3 ohne signifikante Bildsprünge bei der Bewegung des Kopfs. Durch periodische Wiederholung der Betrachtungszonen $VZ_1$, ..., $VZ_N$ über einen Zuschauerbereich 2 mit einer Breite von z.B. 10 m werden so etwa 475 Bilder über den Ausstrahlwinkel der Leuchtmodule 4 erzeugt.

Wie aus Fig. 2 weiters ersichtlich, empfängt ein Betrachter 3 mit seinem linken Auge 5 den Lichtimpuls $I_1$ eines ersten Leuchtmoduls 4, das sich an einer Horizontalposition $\tilde{x}_1$ am Display 1 befindet, unter einem Winkel $\alpha_1$ und den Lichtimpuls $I_1'$ eines weiteren, an einer anderen Horizontalposition $\tilde{x}_2$ befindlichen Leuchtmoduls 4 aus einem anderen Winkel $\alpha_1'$, was bedeutet, dass auch die Betrachtungszonen $VZ_n$ der unterschiedlichen Leuchtmodule 4 untereinander korreliert werden, um zu einem bestimmten Zeitpunkt an einem bestimmten Ort (z.B. linkes Auge 5) des Zuschauerbereichs 2 genau die

richtige Betrachtungszone $VZ_n$ darzustellen.

Die minimale Entfernung $d_{min}$, in der sich ein Betrachter 3 befinden kann, um Lichtimpulse $I_i$ aller Leuchtmodule des Displays 1 wahrnehmen zu können, ist dabei durch den Beginn jenes Bereichs bestimmt, in dem sich Lichtimpulse $I_i$ aller Leuchtmodule 4 überlappen können. Um die Breite der Betrachtungszonen $VZ_n$ an einen vorgegebenen Augenabstand $d_A$ eines Betrachters 3 in einem bestimmten Betrachtungsabstand d anpassen zu können, können optional die Ablenkwinkel $\alpha_i$ der Lichtimpulse $I_i$ für verschiedene Betrachtungsabstände $d_1$, $d_2$ reduziert bzw. vergrößert werden, wodurch das Display 1 auf einen gewünschten Betrachtungsabstand d kalibriert werden kann.

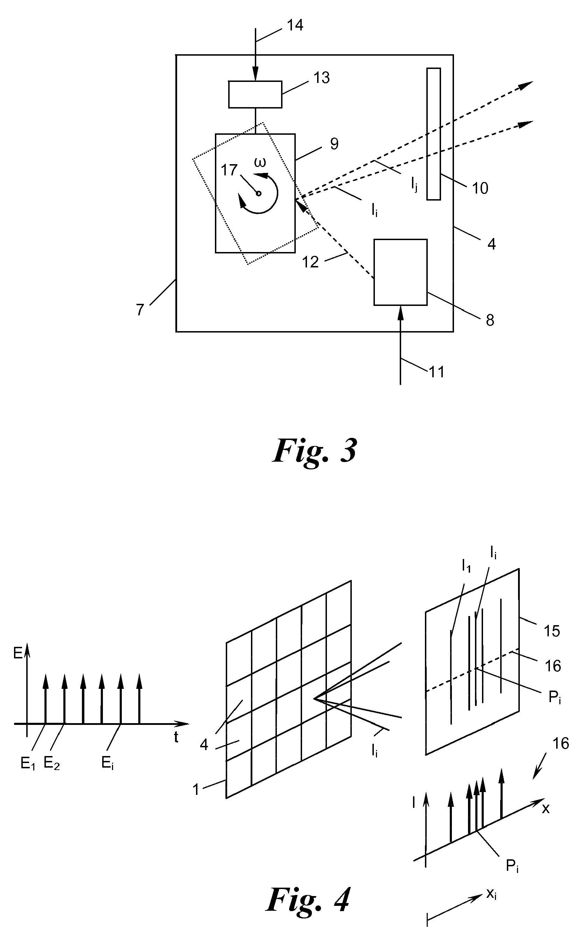

In Fig. 3 ist ein Leuchtmodul 4 nach dem Stand der Technik abgebildet. Das Leuchtmodul 4 umfasst einen Träger 7, an dem eine Leuchteinheit 8, ein beweglich gelagerter Spiegel 9 und eine Optik 10 in zueinander definierten räumlichen Beziehungen angeordnet sind. Die Leuchteinheit 8 umfasst eine oder mehrere Leucht- oder bevorzugt Laserdioden, bevorzugt unterschiedlicher Primärfarben, z.B. Rot, Grün und Blau. Alternativ oder zusätzlich kann eine Mehrzahl von Leucht- oder Laserdioden zur Leistungserhöhung eingesetzt werden. Im Folgenden wird die Funktion der Leuchteinheit 8 anhand einer Leucht- oder Laserdiode erläutert; es versteht sich, dass die erörterten Komponenten für eine Mehrzahl von Leucht- oder Laserdioden entsprechend vervielfacht werden können.

Die Leuchteinheit 8 wandelt ein Videosignal 11 mit einer Folge von elektrischen Impulsen $E_1$, $E_2$, ..., allgemein $E_i$, (Fig. 4) in ein Lichtsignal 12 mit einer Folge von optischen Impulsen $I_1$, $I_2$, ..., allgemein $I_i$, um, die vom sich bewegenden Spiegel 9 reflektiert und über den Ausstrahlwinkel $\alpha_i$ (Fig. 2) in Form der Lichtimpulse $I_i$ (Fig. 1) verteilt werden. Eine (optionale) Optik 10, die in Strahlrichtung vor oder nach dem Spiegel 9 angeordnet ist, kann dabei die Lichtimpulse $I_i$ jeweils in einen Lichtfächer formen, wie in Fig. 1 gezeigt.

Wenn die Lichtimpulse $I_i$ als konvergente "Strahlenbündel" vom Leuchtelement 8 emittiert werden, können diese von der Optik 10 in einer räumlichen Dimension aufgefächert werden, um Lichtfächer zu erzeugen, die in vertikalen Ebenen liegen. Bevorzugt werden jedoch die Lichtimpulse $I_i$ von einer Optik 10 in Form z.B. einer FAC (Fast Axis Collimator) Linse zu den Lichtfächern kollimiert, falls die Lichtimpulse $I_i$ divergierend von dem Leuchtelement 8 emittiert werden. In letzterer Ausführungsform werden die Lichtimpulse $I_i$ bevorzugt vor der Ablenkung durch den Spiegel 9 kollimiert, d.h. die Optik 10 liegt zwischen Leuchtelement 8 und Spiegel 9 (in Fig. 3 nicht gezeigt).

Die Optik 10 kann dazu von beliebiger in der Technik bekannter Art sein, z.B. eine Kombination eines oder mehrerer refraktiver Elemente wie Sammel- oder Zerstreuungslinsen und/oder eines oder mehrerer diffraktiver Elemente wie Beugungsgitter od.dgl.

Ein Antrieb 13, der den Spiegel 9 in eine Schwingbewegung versetzt, wird von einem Steuersignal 14 mit z.B. Sägezahn-Profil angesteuert, um eine Sägezahn-Schwingung des Spiegels 9 zu bewirken, welche zu einer entsprechenden Schwenkbewegung der Lichtimpulse $I_i$ über den Zuschauerbereich 2 führt. Der Antrieb 13 kann je nach Anforderung von elektromagnetischer, elektrostatischer, elektrothermischer und/oder piezoelektrischer Art sein und eine dazu allenfalls erforderliche Treiberelektronik umfassen.

Das eingehende Videosignal 11 umfasst für jede zu projizierende Betrachtungszone $VZ_n$ einen Bildkanal $BK_n$, der für die in diese Betrachtungszone $VZ_n$ auszusendenden Lichtimpulse $I_i$ entsprechende elektrische Impulse $E_i$ zur Steuerung der Leuchteinheit 8 enthält.

Fig. 4 zeigt die Umwandlung und Projektion der elektrischen Impulse $E_i$ vom Leuchtmodul 4 als Lichtimpulse $I_i$ auf eine etwa vertikale Ebene 15 im Zuschauerbereich 2. Die Ebene 15 kann ein Projektionsschirm oder einfach nur eine gedachte (virtuelle) Betrachtungsebene sein, in der sich der Betrachter 3 befindet. Bei in regelmäßigen zeitlichen Abständen eingespeisten elektrischen Impulsen $E_i$ und einer weitgehend konstanten Winkelgeschwindigkeit $\omega$ der Schwingbewegung des Spiegels 9 entsteht durch die Schwingbewegung eine unregelmäßige Verteilung der Lichtimpulse $I_i$ über die Ebene 15 entlang einer betrachteten Bahn 16, die windschief zur Schwingachse 17 des Spiegels, z.B. horizontal in der Ebene 15, verläuft. Die Auftreffpunkte $P_i$ der Lichtimpulse $I_i$ auf der Bahn 16 folgen dabei - bedingt durch die Geometrie der Projektion auf eine Ebene (Fig. 2) - im Wesentlichen einer Tangens-Verteilung mit einer Häufung in der Mitte. Durch Unregelmäßigkeiten und Nichtlinearitäten der Spiegelbewegung, wie Über- und Unterschwingungen des Spiegels 9, Fehljustierungen des Spiegels 9 bzw. des Leuchtelements 8 gegenüber dem Träger 7 oder der Leuchtmodule 4 im Display 1, weicht die Verteilung der Auftreffpunkte $P_i$ am Zuschauerbereich 2 entlang der Bahn 16 jedoch zusätzlich von einer "reinen" Tangensverteilung ab. Umfasst das Leuchtelement 8 eine Mehrzahl von Leucht- oder Laserdioden, können die eben beschriebenen Unregelmäßigkeiten und Nichtlinearitäten für jede Leucht- oder Laserdiode verschieden sein.

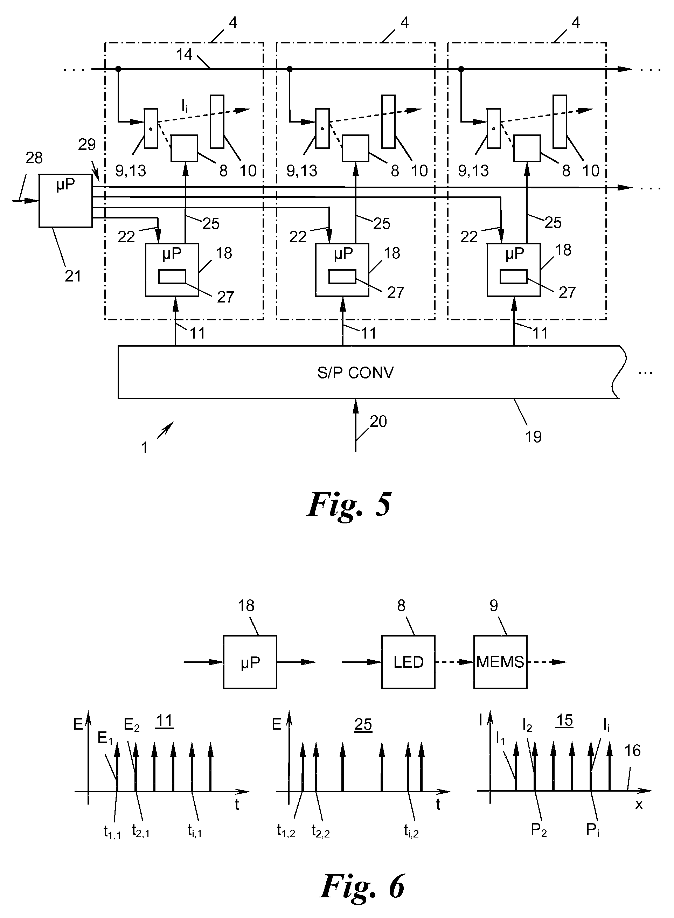

Die nun im Folgenden beschriebenen Vorrichtungen und Verfahren überwinden diese Probleme. Fig. 5 zeigt ein erfindungsgemäßes Display 1 mit einer Vielzahl von erfindungsgemäßen Leuchtmodulen 4 (nur drei beispielhaft in Blockschaltbildform dargestellt). Gleiche Bezugszeichen bezeichnen gleiche Elemente wie in den Fig. 1 - 4. Insbesondere ist jedes der Leuchtmodule 4 wie in Fig. 3 aufgebaut (der Träger 7 wurde hier zwecks Übersichtlichkeit nicht dargestellt), mit den folgenden Abänderungen.

Das Leuchtmodul 4 enthält hier eine Recheneinheit 18, über welche das Videosignal 11 der Leuchteinheit 8 zugeführt wird und die das Videosignal 11 in einer weiteren unten noch näher beschriebenen Art und Weise zeitlich "vorverzerrt", um die in Fig. 4 skizzierten Abbildungsfehler zu kompensieren. Allen Leuchtmodulen 4 bzw. Recheneinheiten 18 ist ein gemeinsamer Seriell/Parallel-Konverter (S/P-Konverter) 19 vorgeschaltet, der jedem Leuchtmodul 4 das ihn betreffende Videosignal 11 eines dem gesamten Display 1 zugeführten Zeitmultiplexsignals 20 auskoppelt und zuführt. Es versteht sich, dass anstelle des S/P-Konverters 19 auch ein beliebiger anderer Demultiplexer oder eine Display-Ansteuerschaltung verwendet werden kann, welcher bzw. welche in der Lage ist, die in einem seriellen oder parallelen 3D-Videosignal mit zwei oder mehreren Bildkanälen für verschiedene Betrachtungszonen $VZ_n$ enthaltenen Videosignale 11 den einzelnen Leuchtmodulen 4 in richtiger Reihenfolge zuzuführen.

Eine allen Leuchtmodulen 4 gemeinsame, weitere Recheneinheit 21 ist an Steuereingänge 22 der Recheneinheiten 18 der Leuchtmodule 4 angeschlossen, um diese gemeinsam beeinflussen zu können, wie später noch näher erläutert.

Es versteht sich, dass die Recheneinheiten 18, die gemeinsame weitere Recheneinheit 21 und der S/P-Konverter 19 sowohl durch gesonderte als auch gemeinsame Rechenmittel realisiert werden können, und zwar sowohl durch Hardwaremodule als auch durch entsprechende Softwaremodule. So können alle hier beschriebenen Rechenmittel und Rechenschritte z.B. auf einem einzigen entsprechend programmierten Grafikprozessorchip laufen, welcher das Display 1 steuert.

Weiters können die Antriebe 13 der Spiegel 9 entweder alle durch dasselbe Steuersignal 14 angesteuert werden oder jeweils über ein eigenes, individuelles Steuersignal (nicht gezeigt).

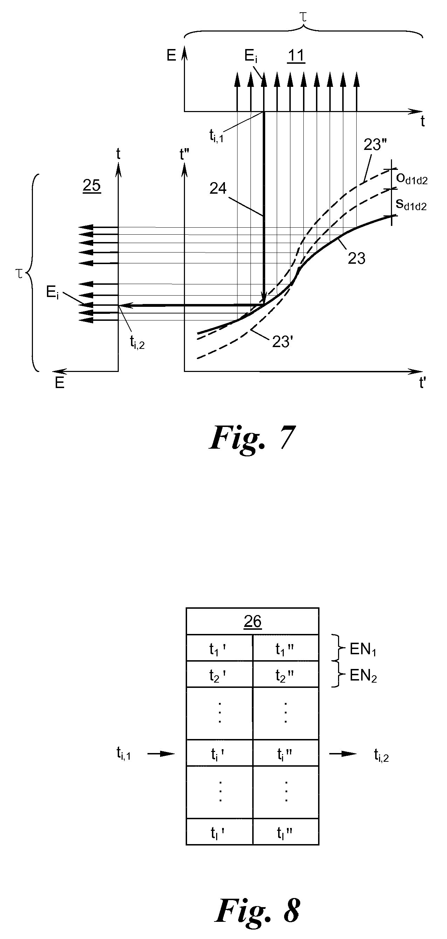

Die Fig. 6 bis 9 zeigen die Funktionsweise der Recheneinheiten 18 im Detail. In jeder Recheneinheit 18 ist eine Zeitverzerrungs- bzw. Abbildungsfunktion 23 implementiert, welche einem zu einem ersten Zeitpunkt $t_{i,1}$ innerhalb einer Spiegelperiode $\tau$ eintreffenden elektrischen Impuls bzw. Abtastwert $E_i$ des Eingangssignals 11 des Leuchtmoduls 4 einen zweiten Zeitpunkt $t_{i,2}$ innerhalb derselben Spiegelperiode $\tau$ zuordnet, siehe Mapping-Pfeil 24 in Fig. 7. Am Ausgang der Recheneinheit 18 ergibt sich so ein gemäß der Abbildungsfunktion 23 zeitverzerrtes Videosignal 25, welches dem Leuchtelement 8 zugeführt wird (Fig. 6). Ist die Abbildungsfunktion 23 richtig eingestellt (kalibriert), ergibt sich am Ausgang des gesamten optomechanischen Abbildungssystem aus Leuchtelement 8 und schwingendem Spiegel 9, hier der Ebene 15, auf einer etwa horizontalen Betrachtungsbahn 16 eine regelmäßig beabstandete Folge von Lichtimpulsen $I_i$ bzw. Auftrefforten $P_i$ derselben, wenn das Videosignal 11 regelmäßig beabstandete Impulse $E_i$ enthält. Umfasst das Leuchtelement 8 wie erörtert eine Mehrzahl von Leucht- oder Laserdioden, kann für jede Leucht- oder Laserdiode eine jeweils eigene Abbildungsfunktion 23 in der Recheneinheit 18 implementiert oder jeweils eine eigene Recheneinheit 18 mit einer eigenen Abbildungsfunktion 23 vorgesehen werden.

Die Abbildungsfunktion 23 kann beispielsweise durch die Kennlinie(n) von entsprechenden elektronischen Hardwarebauteilen in der Recheneinheit 18 realisiert werden. Im einfachsten Fall ist die Abbildungsfunktion 23 eine Arcus-Tangens Funktion, welche die geometrisch bedingte Tangens-Verzerrung der Impulsablenkung über einen schwingenden Spiegel auf eine Ebene kompensiert. Um jedoch auch die oben erwähnten leuchtmodulspezifischen Toleranzen von Leuchteinheit 8, Spiegel 9, Antrieb 13 usw. für jedes Leuchtmodul 4 individuell zu kompensieren, ist die Abbildungsfunktion 23 bevorzugt eine gespeicherte Kennlinie, z.B. als Zuordnungtabelle 26 in einem Speicher 27 jedes Leuchtmoduls 4 gespeichert. Fig. 8 zeigt ein Beispiel einer solchen Zuordnungstabelle 26, welche die Abbildungsfunktion 23 in der Recheneinheit 18 implementiert. Jeder Eintrag $EN_1$, $EN_2$, ..., allgemein $EN_i$, in der Zuordnungstabelle 26 enthält ein Zeitpaar aus einem ersten Zeitpunkt $t_i'$ und einem zugeordnetem zweiten Zeitpunkt $t_i''$, um der Recheneinheit 18 in jeder Spiegelperiode $\tau$ die erläuterte Zeitverzerrung des Videosignals 11 zum vorverzerrten Videosignal 25 zu ermöglichen.

Aus Fig. 5 ist weiters die (optionale) zusätzliche Recheneinheit 21 ersichtlich, mit deren Hilfe die Abbildungsfunktionen 23 aller Leuchtmodule 4 gleichzeitig, jedoch jeweils individuell verstellt werden können. Dies kann insbesondere dazu eingesetzt werden, um das gesamte Display 1 auf eine neue optimale Betrachtungsdistanz $d_2$ (Fig. 2) einzustellen.

Aus der Geometrie in Fig. 2 kann für ein Display 1 mit horizontalen Reihen und vertikalen Spalten von Leuchtmodulen 4 für ein Leuchtmodul und zwei verschiedene Abbildungsfunktionen 23, hier als $X_{d1}(t)$ und $X_{d2}(t)$ für zwei verschiedene Betrachtungsabstände $d_1$ und $d_2$ bezeichnet, die folgende Beziehung aufgestellt werden:

$$X_{d2}(t) = \frac{d_2}{d_1} \cdot X_{d1}(t) + \tilde{x} \cdot (1 - \frac{d_2}{d_1})$$

$$X_{d2}(t) = s_{d1d2} \cdot X_{d1}(t) + o_{d1d2}$$

wobei $\tilde{x}$ die Position des betrachteten Leuchtmoduls 4 in einer horizontalen Richtung entlang des Displays 1 ist. Die Ausdrücke

$$s_{d1d2} = \frac{d_2}{d_1}$$

und

$$o_{d1d2} = \tilde{x} \cdot (1 - \frac{d_2}{d_1})$$

können dabei als individueller Skalierwert $s_{d1d2}$ bzw. Offsetwert $o_{d1d2}$ für die Abbildungsfunktion 23 des jeweiligen Leuchtmoduls 4 betrachtet werden.

Die weitere Recheneinheit 21 empfängt nun beispielsweise an einem Stelleingang 28 die gewünschte neue Betrachtungsdistanz $d_2$ und berechnet alle individuellen Skalierwerte $s_{d1d2}$ und Offsetwerte $o_{d1d2}$ für die Leuchtmodule 4 und führt sie diesen über eine Vielzahl von Ausgängen 29 zu.

Die Recheneinheiten 18 der Leuchtmodule 4 empfangen die jeweiligen Skalierwerte $s_{d1d2}$ und Offsetwerte $o_{d1d2}$ und skalieren bzw. versetzen ihre gespeicherten Abbildungsfunktionen 23 (Kennlinien X(t) bzw. Zuordnungstabellen 26), siehe die strichlierten Kurven 23', 23'' in Fig. 7. Jedes Leuchtmodul 4 ist nun individuell - je nach dessen Arrayposition $\tilde{x}$ im Display 1 - auf die neue optimale Betrachtungsdistanz $d_2$ eingestellt, ohne dass dazu eine neue Abbildungsfunktion 23 in seiner Recheneinheit 18 hinterlegt werden muss. Das Display 1 kann so in einem einzigen Schritt auf eine gewünschte neue optimale Betrachtungsdistanz $d_2$ eingestellt werden.

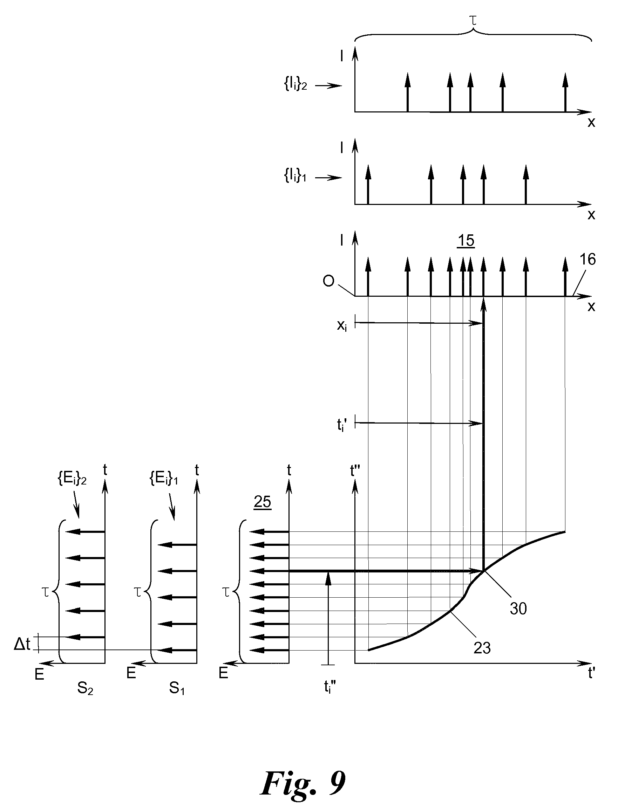

Fig. 9 zeigt ein Verfahren zur Erstellung der Zuordnungstabelle 26 und damit Kalibrierung eines Leuchtmoduls 4 des Displays 1 im Überblick. Dazu wird ein Videosignal 25 mit periodischen elektrischen Impulsen $E_i$ direkt in das Leuchtelement 8 eingespeist. Die Anzahl von Impulsen $E_i$ pro Spiegelperiode $\tau$ bestimmt dabei die anschließend erzielbare Genauigkeit des Verfahrens. Für jeden elektrischen Impuls $E_i$ wird die Position $x_i$ des Auftreffpunkts $P_i$ des erzeugten Lichtimpulses $I_i$ auf der Bahn 16 gemessen. Die Bahnposition $x_i$ des Auftreffpunkts $P_i$ wird bezüglich eines gemeinsamen Referenzpunkts O auf der Bahn 16 gemessen, welcher z.B. jener Punkt auf der Bahn 16 ist, auf den der allererste Impuls $E_i$ in einer Spiegelperiode $\tau$ projiziert wird. Die Bahnposition $x_i$ des Auftreffpunkts $P_i$ wird nun in einen ("ersten") Zeitwert $t_i'$ in einem Zeitmaßstab $t'$ umgerechnet, welcher sich daraus ergibt, dass die örtliche Spanne aller möglichen Impulse $E_i$ bzw. $I_i$ der zeitlichen Spiegelperiode $\tau$ entsprechen soll.

Das Zeitäquivalent $t_i'$ der Bahnposition $x_i$ des Lichtimpulses $I_i$ einerseits und der bekannte Zeitpunkt $t_i''$ (modulo der Spiegelperiode $\tau$) des elektrischen Impulses $E_i$ andererseits, d.h. das Wertepaar $(t_i', t_i'')$, definieren einen Messpunkt 30 der Abbildungsfunktion 23 in der Zeit/Zeit-Ebene $t'/t''$ und können gleichzeitig als ein Eintrag $EN_i$ in der Zuordnungstabelle 26 gespeichert werden.

Das Verfahren wird für möglichst viele, über die gesamte Spiegelperiode $\tau$ verteilte Impulse $E_i$ durchgeführt, um möglichst viele Punkte 30 der Abbildungsfunktion 23 bzw. Einträge $EN_i$ in der Zuordnungstabelle 26 zu erstellen. Weitere (Zwischen-) Einträge $EN_i$ in der Zuordnungstabelle 26 können dann durch Interpolation bestehender Einträge $EN_i$ erstellt werden, sowohl vorberechnet und abgespeichert in der Zuordnungstabelle 26, als auch erst in Echtzeit im Betrieb der Recheneinheit 18 generiert, wenn für einen Abtastwert des Videosignals 11 zu einem "ersten" Zeitpunkt t' innerhalb der Spiegelperiode $\tau$ ein passender Eintrag $EN_i$ benötigt wird und nicht (vorgespeichert) verfügbar ist.

Fig. 9 zeigt ferner die optionale Maßnahme, durch "Interleaving" von mehreren, in verschiedenen Phasen $S_1$, $S_2$, ... des Verfahrens sukzessive um kleine Zeitspannen $\Delta t$ geringfügig versetzten Impulssätzen $\{E_i\}_1$, $\{E_i\}_2$, ... mit größeren Impulsabständen die erzielbare Messgenauigkeit bei der Vermessung der Bahnpositionen $x_i$ zu erhöhen. Aufgrund der in der Realität nicht "ideal-linienförmigen" Breite der Lichtimpulse $I_i$ in der Betrachtungsebene 15 können die räumlichen Intensitätsverteilungen bei zu knapper Abfolge der elektrischen Impulse $E_i$ überlappen, so dass ihre Bahnpositionen $x_i$ - z.B. als Orte der Intensitätsmaxima der Lichtimpulse $I_i$ - nicht mehr genau bestimmbar sind bzw. unzuordenbar werden. Durch die größeren Impulsabstände in den elektrischen Impulssätzen $\{E_i\}_1$, $\{E_i\}_2$, ... in den Messphasen $S_1$, $S_2$, ... können ausreichende Abstände in jeweiligen Lichtimpulssätzen $\{I_i\}_1$, $\{I_i\}_2$, ... auf der Bahn 16 erreicht werden, um die Bahnpositionen $x_i$ leichter bestimmen zu können.

In allen beschriebenen Ausführungsformen kann ein elektrischer Impuls $E_i$ zu einem jeweiligen Zeitpunkt $t_i''$, bezogen auf die Spiegelperiode $\tau$, nur einmal in das Leuchtelement 4 eingespeist werden, was zu einem Aufblitzen des jeweiligen Lichtimpulses $I_i$ an der Bahnposition $x_i$ führt, oder auch periodisch über mehrere Spiegelperioden $\tau$, um die Bahnpositionen $x_i$ der Lichtimpulse $I_i$ über einen längeren Zeitraum messen zu können.

Die Abbildungsfunktion 23 bzw. Zuordnungstabelle 26 kann anstelle des in Fig. 9 gezeigten Verfahrens auch durch ein iteratives Verfahren ermittelt werden, indem z.B. durch ein Monte-Carlo-Verfahren verschiedene Werte getestet und angepasst werden.

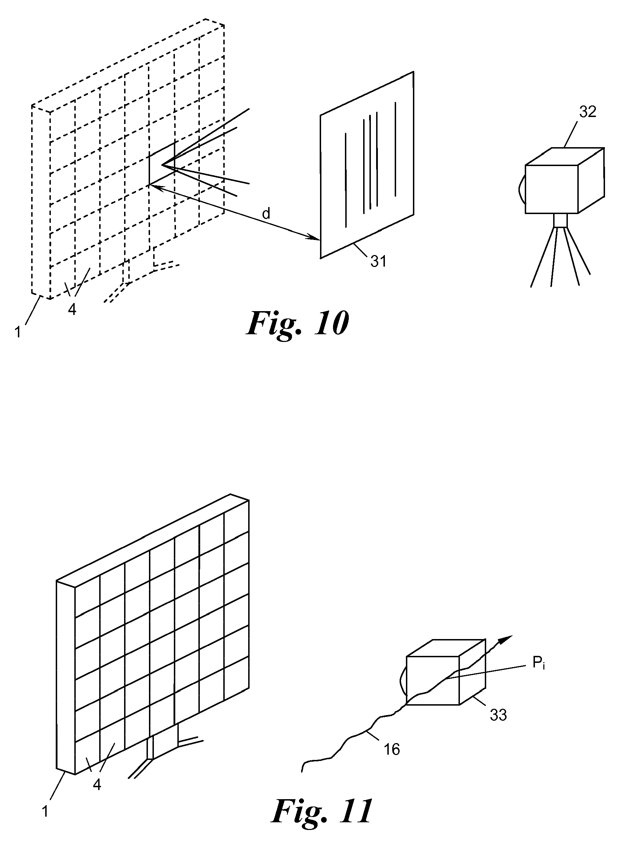

Die Ermittlung der Bahnpositionen $x_i$ der Lichtimpulse $I_i$ eines Leuchtmoduls 4 kann jeweils sowohl einzeln für jedes Leuchtmodul 4 gesondert als auch in einem Schritt für alle Leuchtmodule 4 des Displays 1 auf einmal durchgeführt werden, wie nun anhand der Fig. 10 bis 16 erläutert wird. Es versteht sich, dass bei einer Mehrzahl von Leucht- oder Laserdioden pro Leuchteinheit 8, z.B. für unterschiedliche Primärfarben, das im Weiteren beschriebene Verfahren für jede Leucht- oder Laserdiode des Leuchtelements 8 nacheinander - oder z.B. bei Verwendung entsprechender Farbfilter oder farbselektiver Sensorelemente in einem Lichtdetektor auch gleichzeitig - durchgeführt werden kann.

Fig. 10 zeigt eine Ausführungsform, bei der jedes Leuchtmodul 4 einzeln kalibriert wird. Dazu wird ein ortsfester Schirm 31 in der gewünschten Kalibrierungsdistanz d zum Display 1 aufgestellt, bevorzugt parallel dazu. Das von einem einzelnen Leuchtmodul 4 bei Einspeisung des Kalibrier-Videosignals 25 von Fig. 9 auf dem Schirm 31 bevorzugt mit der Spiegelperiode $\tau$ erzeugte Lichtstrich-Muster von Lichtimpulsen $I_i$ wird mit einem ortsfesten Aufnahmegerät 32, z.B. einer 2D-Fotokamera, einem Zeilen-(1D-)Photodetektor, etc. aufgenommen.

In der Bildaufnahme des Aufnahmegeräts werden die Auftreffpunkte $P_i$ und damit die Bahnpositionen $x_i$ der Lichtimpulse $I_i$ entlang der Betrachtungsbahn 16 - z.B. eine horizontale Gerade auf dem Schirm 31 für Leuchtmodule 4 mit vertikaler Schwingachse 17 - z.B. mittels elektronischer Bildverarbeitung detektiert. Anschließend wird dieser Vorgang für alle weiteren Leuchtmodule 4 des Displays 1 wiederholt.

Anstelle eines ortsfesten Aufnahmegeräts 32, welches alle Bahnpositionen $x_i$ gleichzeitig aufnimmt, kann auch ein mobiler Lichtdetektor 33 verwendet werden, welcher entlang der Bahn 16 bewegt wird, um die Bahnpositionen $x_i$ zeitlich aufeinanderfolgend punktweise aufzunehmen; die Bahn 16 stellt dann die Trajektorie eines solchen mobilen Lichtdetektors 33 dar. Die Fig. 11 bis 16 zeigen Ausführungsformen des Verfahrens, welche auf der Verwendung eines solchen entlang der Bahn (Trajektorie) 16 bewegten Lichtdetektors 33 beruhen und dabei in der Lage sind, alle Leuchtmodule 4 gleichzeitig und somit das Display 1 in einem Schritt zu kalibrieren.

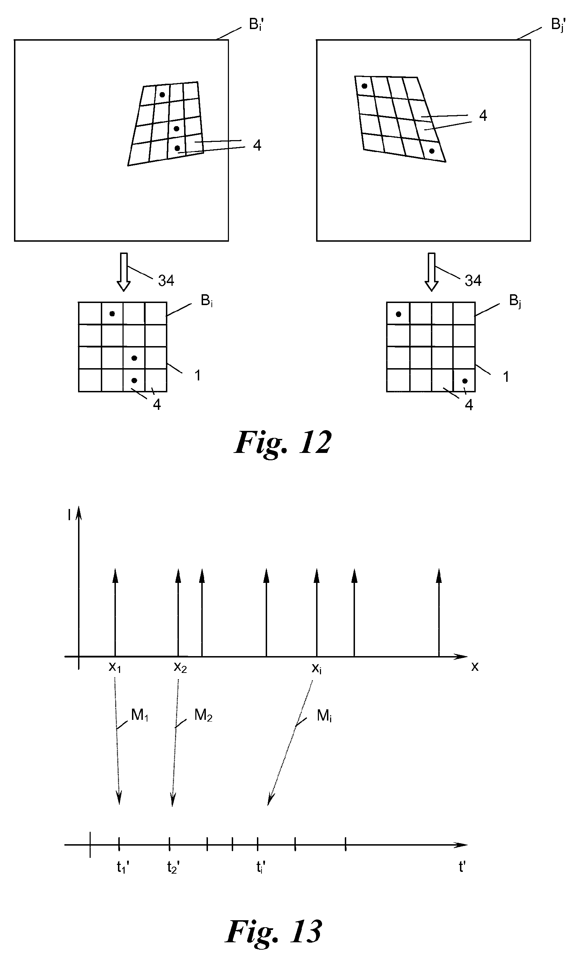

Dazu wird ein Lichtdetektor in Form einer Kamera 33 verwendet, welche von einer Bahnposition $x_i$ entlang der Bahn 16 jeweils alle Leuchtmodule 4 gleichzeitig aufnehmen kann, d.h. an jeder Bahnposition $x_i$ ein Bild $B_i'$ (Fig. 12) des gesamten Displays 1 aufnimmt, das die auf diese Bahnposition $x_i$ gerichteten Lichtimpulse $I_i$ aller Leuchtmodule 4 enthält.

Fig. 12 zeigt zwei an verschiedenen Punkten entlang der Bahn 16, d.h. an zwei verschiedenen Bahnpositionen $x_i$, $x_j$ ($i \neq j$), aufgenommene Bilder $B_i'$, $B_j'$ des Displays 1. Mittels geometrischer Entzerrung 34 werden aus den aufgenommenen Bildern $B_i'$, $B_j'$ standardisierte und entzerrte Bilder $B_i$, $B_j$ des Displays 1 extrahiert. Zeigt ein Bild $B_i$ ein Leuchtmodul 4 als beleuchtet an (dargestellt durch ein Punktsymbol in Fig. 12), gibt dies einen auf die Bahnposition $x_i$ gerichteten Lichtimpuls $I_i$ dieses Leuchtmoduls 4 an, welchem Lichtimpuls $I_i$ somit die Bahnposition $x_i$ als Auftreffpunkt $P_i$ auf der Bahn 16 zugewiesen werden kann. Wurden für ein Leuchtmodul alle Bilder $B_i$ entlang der Bahn 16 aufgenommen und in dieser Weise das Vorhandensein von Lichtimpulsen $I_i$ dieses Leuchtmoduls 4 überprüft, können die so ermittelten Bahnpositionen $x_i$ der Lichtimpulse $I_i$ wieder entlang der Bahn 16 aufgetragen und daraus - unter Kompensation um die Horizontalposition $\tilde{x}$ des jeweiligen Leuchtmoduls - wie oben beschrieben die Zuordnungstabelle 26 gewonnen werden.

Wenn die Bewegungsbahn 16 der Kamera 33 eine Gerade war, können die den Bahnpositionen $x_i$ entsprechenden ersten Zeitpunkte $t_i'$ für die Zuordnungstabelle 26 direkt - als einfacher linearer Zusammenhang wie oben in Fig. 9 erörtert - zugewiesen werden. Dazu kann die Kamera 33 z.B. entlang einer Schiene in der gewünschten Kalibrierungsdistanz d mit konstanter Geschwindigkeit geführt werden. Wenn die Bewegungsbahn 16 der Kamera 33 jedoch unregelmäßig (nicht-gerade) ist, wie in Fig. 11 gezeigt, und die Kamera weiters auch noch mit nicht-konstanter Geschwindigkeit entlang der Bahn 16 geführt wird, weil sie beispielsweise mit der Hand gehalten wird, dann ist eine genaue Ermittlung des jeweiligen Ortes $x_i$ (Fig. 13) der Kamera 33 bei Erstellung einer Bildaufnahme $B_i'$ erforderlich, um diesen auf einen entsprechenden ersten Zeitwert $t_i'$ (Fig. 13) abzubilden bzw. umzurechnen, welcher einer Kamerabewegung entlang einer geraden Bahn 16 entspräche, siehe Zuordnungspfeile $M_i$ in Fig. 13.

Bei einer bekannten konstanten Bilderzeugungsrate der Kamera 33, z.B. 25 Bilder pro Sekunde, ist zur Ermittlung der Orte $x_i$ der Bilder $B_i$ die Ermittlung der Trajektorie (Raumkurve, Spline) 16 der Kamera 33 sowie ihrer jeweils aktuellen Momentangeschwindigkeit ausreichend, unter der Annahme, dass ihre Winkelausrichtung auf der Bahn 16 unberücksichtigt bleiben kann, weil dies durch die Entzerrung 34 bereits berücksichtigt wurde. Die Bahn bzw. Trajektorie 16 der Kamera 33 und deren Momentangeschwindigkeiten entlang der Bahn 16 können dabei durch einzelne oder eine Kombination der folgenden Varianten ermittelt werden.

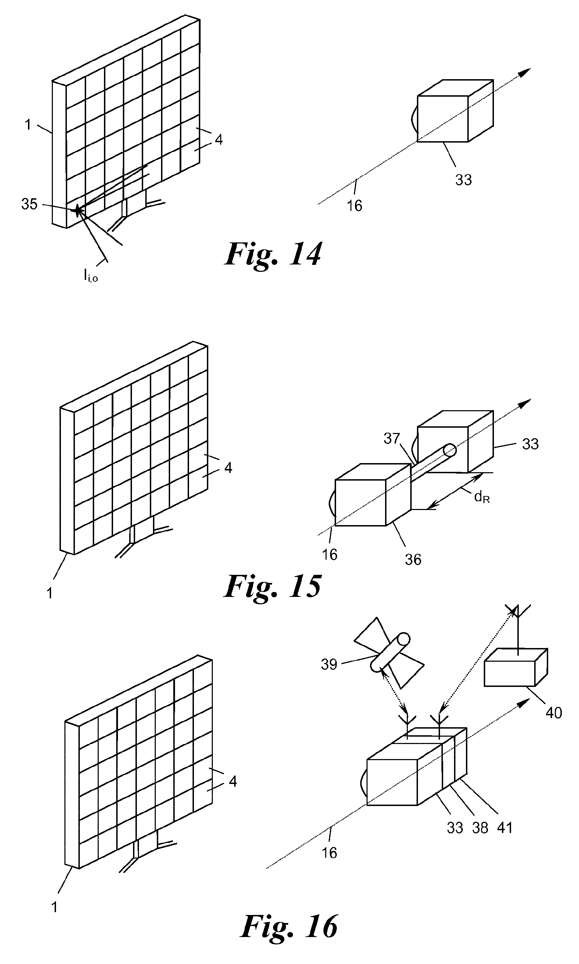

In einer ersten Variante nach Fig. 14 befindet sich dazu ein Referenz-Leuchtmodul 35 an einer bekannten Stelle des Displays 1, welches Lichtimpulse $I_{i,o}$ in verschiedene, bekannte Winkel bezüglich des Displays 1 projiziert. Empfängt die Kamera 33 von dem Referenz-Leuchtmodul 35 eine Beleuchtung, so kann daraus die Bahnposition $x_i$ der Kamera 33 ermittelt werden.

Das Referenz-Leuchtmodul 35 kann dazu beliebig ausgestaltet sein, z.B. kann eines der Leuchtmodule 4 des Displays 1 mit dem in Fig. 9 gezeigten Kalibrierungsverfahren "vorkalibriert" werden und als Referenz-Leuchtmodul 35 dienen; oder es kann als gänzlich andere Vorrichtung ausgebildet sein, die z.B. mehrere Leuchtelemente 8 mit verschiedenen, fixen Aussenderichtungen $\beta_o$ anstelle eines schwingenden Spiegels 9 umfasst.

Fig. 15 zeigt eine weitere Ausführungsform, in der mindestens eine Referenz-Kamera 36 über eine gemeinsame Trägerstruktur 37 in einem festen Abstand $d_R$ mit der Kamera 33 verbunden ist und gemeinsam mit dieser entlang der Bahn 16 bewegt wird. Durch Vergleich der Bilder der beiden Kameras 33, 36 kann die Bewegung der Kameras 33, 36 festgestellt werden, z.B. deren Geschwindigkeit und Beschleunigung, woraus sich die Trajektorie 16 ermitteln lässt. Beispielsweise nimmt die Kamera 33 ein Bild $B_1$ auf und die Referenzkamera 36 nach 0,1 s dasselbe Bild $B_1$. Bei einem festen Abstand von $d_R$ = 10 cm ergibt dies eine Momentangeschwindigkeit der Kamera 33 von 1 m/s. Aus einem bekannten Startzeitpunkt und -ort, der Bewegungsrichtung und der so ermittelten Geschwindigkeiten können den einzelnen Bildern $B_i$ Bahnpositionen $x_i$ zugewiesen werden.

Fig. 16 zeigt noch eine weitere Ausführungsform, bei der an der Kamera 33 ein Satellitennavigationsempfänger 38 zur Positionsmessung, z.B. ein GPS oder dGPS-Empfänger, der Positionsdaten von Satelliten 39 und/oder terrestrischen Stütz-Funkbaken 40 erhält, und/oder ein Inertialsensor (Inertial Measurement Unit, IMU) 41 angebracht werden, um die Bewegungsbahn bzw. Trajektorie 16 der Kamera 33 für die genannten Zwecke zu ermitteln. Der Inertialsensor 41 kann dabei eine translatorische Beschleunigung entlang einer, zweier oder dreier Raumachsen und/oder eine Rotationsbeschleunigung um eine, zwei oder drei Raumachsen messen.

Die Ausführungsformen der Fig. 14 bis 16 können einzeln oder auch zusammen für eine verbesserte Messgenauigkeit eingesetzt werden. Auch weitere Daten wie Kippwinkel, Entfernung der Kamera 33 zum Display 1 etc. können für eine Erhöhung der Messgenauigkeit eingesetzt werden.

Die Kamera 33 und ihre optionalen Komponenten GPS-Empfänger 38 und Inertialsensor 41 können z.B. durch ein handelsübliches Smartphone realisiert werden, das über eine Funkschnittstelle Daten zu den Recheneinheiten 18 des Displays 1 sendet, um dieses in der genannten Art und Weise kalibrieren.

Die beschriebene Leucht- oder Projektionsvorrichtung kann in jeder der oben genannten Ausführungsformen nicht nur als Display 1 zur Anzeige von dreidimensionalen Bildern oder Videos sondern auch für richtungsabhängige Displays, welche abhängig von der Position des Betrachters unterschiedliche Inhalte anzeigen ("Multi-Content"), oder für eine richtungsabhängige Projektion von beliebigem Licht eingesetzt werden, z.B. als Scheinwerfer, der sein Ziel abhängig von dessen Position beleuchten kann.

Die Erfindung ist demgemäß nicht auf die dargestellten Ausführungsformen beschränkt, sondern umfasst alle Varianten und Modifikationen, die den Rahmen der angeschlossenen Ansprüche fallen.

**Patentansprüche**

1. Anzeige- oder Projektionsvorrichtung mit einer Vielzahl von Leuchtmodulen, die in einem Array angeordnet sind, zur Anzeige oder Projektion eines Videosignals, wobei die Leuchtmodule jeweils umfassen:

   einen Träger (7),
   zumindest einen am Träger gelagerten Spiegel (9), der durch einen Antrieb (13) periodisch um eine Schwingachse (17) in Schwingung versetzbar ist, welcher mittels eines Steuersignals (14) steuerbar ist,
   zumindest ein am Träger (7) angeordnetes, auf den Spiegel (9) gerichtetes und über einen Eingang steuerbares Leuchtelement (8), und
   eine Recheneinheit (18) mit zumindest einem Eingang und einem Ausgang, der mit dem Eingang des Leuchtelements (8) verbunden ist, wobei die Recheneinheit (18) dafür ausgebildet ist, zumindest einen an ihrem Eingang zu einem ersten Zeitpunkt ($t_{i,1}$) innerhalb einer Periode ($\tau$) des Spiegels (9) auftretenden Abtastwert des Videosignals (11) gemäß einer in der Recheneinheit (18) gespeicherten Abbildungsfunktion (23) zu einem vom ersten verschiedenen zweiten Zeitpunkt ($t_{i,2}$) innerhalb derselben Periode ($\tau$) als Abtastwert auf ihrem Ausgang auszugeben,

**dadurch gekennzeichnet,**

**dass** die Recheneinheit (18) einen Steuereingang (22) hat, über welchen die gespeicherte Abbildungsfunktion (23) skalierbar und/oder offsetveränderbar ist,

wobei eine den Leuchtmodulen (4) gemeinsame weitere Recheneinheit (21) mit einem Eingang (28) und einer Vielzahl von Ausgängen (29) vorgesehen ist, von denen jeder mit dem Steuereingang (22) der Recheneinheit (18) eines Leuchtmoduls (4) verbunden ist, und

wobei die weitere Recheneinheit (21) dafür ausgebildet ist, für jedes Leuchtmodul (4) abhängig von dessen jeweiliger Position ($\tilde{x}$) im Array und einer an ihrem Eingang (28) vorgegebenen, einem gewünschten Betrachtungsabstand entsprechenden Zielentfernung ($d_2$) einen Skalierungs- ($s_{d1d2}$) und/oder Offsetwert ($o_{d1d2}$) zu ermitteln und auf dem entsprechenden Ausgang (29) auszugeben.

2. Anzeige- oder Projektionsvorrichtung nach Anspruch 1, **dadurch gekennzeichnet, dass** die Abbildungsfunktion (23) durch eine in der Recheneinheit (18) gespeicherte Zuordnungstabelle (26) mit einer Vielzahl von Einträgen ($EN_i$), die jeweils eine Zuordnung zwischen einem ersten ($t_i'$) und einem zweiten Zeitpunkt ($t_i''$) enthalten, implementiert ist.

3. Anzeige- oder Projektionsvorrichtung nach einem der Ansprüche 1 bis 2, **dadurch gekennzeichnet, dass** das Leuchtelement (8) mindestens eine Leucht- oder Laserdiode umfasst, bevorzugt drei Leucht- oder Laserdioden mit unterschiedlichen Primärfarben.

4. Anzeige- oder Projektionsvorrichtung nach einem der Ansprüche 1 bis 3, **gekennzeichnet durch** eine am Träger angeordnete Optik (10), welche einen vom Leuchtelement (8) emittierten Lichtimpuls ($I_i$) zu einem Lichtfächer in einer zur Schwingachse (17) des Spiegels (9) parallelen Ebene formt.

5. Anzeige- oder Projektionsvorrichtung nach einem der Ansprüche 1 bis 4 für ein Videosignal, das zumindest zwei Bildkanäle ($BK_n$) umfasst, **dadurch gekennzeichnet, dass** den Leuchtmodulen (4) ein Demultiplexer (19) vorgeschaltet ist, welcher dafür ausgebildet ist, innerhalb einer Spiegelperiode ($\tau$) jedem Leuchtmodul (4) für dieses Leuchtmodul (4) bestimmte Anteile aus verschiedenen Bildkanälen ($BK_n$) in einer vorgegebenen Sequenz zuzuführen.

6. Verfahren zur Kalibrierung einer Anzeige- oder Projektionsvorrichtung nach einem der Ansprüche 1 bis 5, umfassend, für eines der genannten Leuchtmodule,

a) in Schwingung Versetzen des Spiegels (9) um eine Schwingachse (17) mit einer Spiegelperiode ($\tau$);
b) Einspeisen eines elektrischen Impulses ($E_i$) zu einem bekannten Zeitpunkt ($t_{i,1}$) innerhalb einer Spiegelperiode ($\tau$) in den Eingang der Recheneinheit (18);
c) Messen der Bahnposition ($x_i$) eines von der Leuchteinheit (9) gemäß dem elektrischen Impuls ($E_i$) ausgesandten und vom Spiegel (9) abgelenkten Lichtimpulses ($I_i$) auf einer Bahn (16);
d) Speichern des bekannten Zeitpunktes ($t_{i,1}$), bezogen auf die Spiegelperiode ($\tau$), als zweiter Zeitpunkt ($t_i''$) in einem Eintrag ($EN_i$) einer die Abbildungsfunktion (23) implementierenden Zuordnungstabelle (26) und Speichern eines der gemessenen Bahnposition ($x_i$) entsprechenden Zeitwerts, bezogen auf die Spiegelperiode ($\tau$) und eine Distanz ($d$), als erster Zeitpunkt ($t_i'$) dieses Eintrags ($EN_i$);
e) Wiederholen der Schritte b) bis d), entweder jeweils für sich oder in ihrer gesamten Abfolge, für zumindest einen weiteren elektrischen Impuls ($E_i$) zu einem weiteren bekannten Zeitpunkt ($t_{i,1}$), der von den bekannten Zeitpunkten ($t_{i-1,1}$, $t_{i-2,1}$, ...), bezogen auf die Spiegelperiode ($\tau$), der vorangegangenen Impulse ($E_{i-1}$, $E_{i-2}$, ...) verschieden ist, um zumindest einen weiteren Eintrag ($EN_i$) der Zuordnungstabelle (26) zu erzeugen;
f) Ermitteln, mittels der weiteren Recheneinheit (21), eines Skalierungs- ($s_{d1d2}$) und/oder Offsetwerts ($o_{d1d2}$) für das genannte Leuchtmodul (4) abhängig von dessen Position ($\tilde{x}$) im Array und der vorgegebenen, einem gewünschten Betrachtungsabstand entsprechenden Zielentfernung ($d_2$); und
g) Empfangen des Skalierwerts ($s_{d1d2}$) und/oder des Offsetwerts ($o_{d1d2}$) am Steuereingang (22) der Recheneinheit (18) zum Skalieren bzw. Versetzen der Abbildungsfunktion (23).

7. Verfahren nach Anspruch 6, **dadurch gekennzeichnet, dass** in Schritt b) der Impuls ($E_i$) repetitiv über mehrere Spiegelperioden ($\tau$) jeweils zum genannten bekannten Zeitpunkt ($t_{i,1}$) bezogen auf die jeweilige Spiegelperiode ($\tau$) eingespeist wird.

8. Verfahren nach Anspruch 6 oder 7, **dadurch gekennzeichnet, dass** weitere Einträge (EN$_i$) in der Zuordnungstabelle (26) durch Interpolieren bestehender Einträge hinzugefügt werden.

9. Verfahren nach Anspruch 6 bis 8, **dadurch gekennzeichnet, dass** die bekannten Zeitpunkte (t$_{i,1}$) der eingespeisten Impulse (E$_i$) entsprechend der Abtastperiode des Videosignals (11) zeitlich voneinander beabstandet sind und eine Spiegelperiode ($\tau$) abdecken.

10. Verfahren nach Anspruch 6 bis 8, **dadurch gekennzeichnet, dass** die bekannten Zeitpunkte (t$_{i,1}$) der eingespeisten Impulse (E$_i$) innerhalb einer Spiegelperiode ($\tau$) entsprechend einem Vielfachen der Abtastperiode des Videosignals (11) zeitlich voneinander beabstandet sind, und das Verfahren unter Variieren der bekannten Zeitpunkte (t$_{i,1}$) wiederholt wird, bis diese die Spiegelperiode ($\tau$) entsprechend der Abtastrate des Videosignals (11) abdecken.

11. Verfahren nach einem der Ansprüche 6 bis 10, **dadurch gekennzeichnet, dass** das Messen der Bahnposition (x$_i$) in Schritt c) durch Projizieren des Lichtimpulses (I$_i$) auf einen Schirm (31) und Abmessen auf dem Schirm (31) bezüglich einer etwa horizontal verlaufenden Bahn (16) erfolgt.

12. Verfahren nach einem der Ansprüche 6 bis 10, **dadurch gekennzeichnet, dass** das Messen der Position (x$_i$) in Schritt c) durch Bewegen eines Lichtdetektors (33) entlang der Bahn (16) und Messen des Detektionsorts (P$_i$) des Lichtimpulses (I$_i$) auf der Bahn (16) erfolgt.

13. Verfahren nach Anspruch 12, **dadurch gekennzeichnet, dass** der Lichtdetektor (33) eine Kamera ist, mittels welcher zu aufeinanderfolgenden Orten und Zeiten entlang der Bahn (16) jeweils ein Bild (B$_i$) aller Leuchtmodule (4) aufgenommen wird, in welchem die Lichtimpulse (I$_i$) der Leuchtmodule (4) detektiert werden, um jedes Leuchtmodul (4) in der genannten Weise zu kalibrieren.

14. Verfahren nach Anspruch 12 oder 13, **dadurch gekennzeichnet, dass** die Bahn (16) mittels zumindest eines Referenz-Leuchtmoduls (35), das Lichtimpulse (I$_{l,o}$) bekannter Position emittiert, auf diese referenziert wird.

15. Verfahren nach einem der Ansprüche 12 bis 14, **dadurch gekennzeichnet, dass** die Geschwindigkeit und/oder Beschleunigung der Kamera (33) entlang der Bahn (16) durch Vergleichen ihrer Bilder (B$_i$) mit den Bildern einer weiteren Kamera (36) bestimmt wird, die in einem festen Abstand (d$_R$) an der erstgenannten Kamera (33) montiert ist.

16. Verfahren nach Anspruch 12 bis 15, **dadurch gekennzeichnet, dass** die Bahn (16) mittels eines Inertialsensors (41) und/oder einer Satellitennavigationseinrichtung (38) des Lichtdetektors (33) bestimmt wird.

**Claims**

1. Display or projection device having multiple illumination modules arranged in an array, to display or project a video signal, each of the illumination modules comprising:

    a carrier (7);
    at least one mirror (9) mounted on the carrier, which can be set into periodic oscillation about an axis of oscillation (17) by a drive (13), which can be controlled by means of a control signal (14);
    at least one illumination element (8) that is arranged on the carrier (7), is directed onto the mirror (9) and can be controlled through an input; and
    a computing unit (18) with at least one input and one output, which is connected with the input of the illumination element (8);
    wherein the computing unit (18) is configured to output at least one sample of the video signal (11) appearing at its input at a first point in time (t$_{i,1}$) within a period ($\tau$) of the mirror (9) in accordance with a mapping function (23) stored in the computing unit (18) at a second point in time (t$_{i,2}$), which is different from the first point in time, within the same period ($\tau$) as a sample at its output;

    **characterized in that**

    the computing unit (18) has a control input (22), through which the stored mapping function (23) can be scaled and/or have its offset changed;
    wherein a further computing unit (21), common to the illumination modules (4), having an input (28) and multiple outputs (29) is provided, each of which is connected with the control input (22) of the computing unit (18) of an illumination module (4); and
    wherein the further computing unit (21) is configured to determine, for each illumination module (4), a scaling value (s$_{d1d2}$) and/or an offset value (o$_{d1d2}$) based on its respective position ($\tilde{x}$) in the array and a target distance (d$_2$) corresponding to a desired viewing distance, the target distance (d$_2$) being given at the input (28) of the further computing unit, and to output it to the corresponding output (29).

**2.** Display or projection device according to claim 1, **characterized in that** the mapping function (23) is implemented by an assignment table (26) stored in the computing unit (18) and having multiple entries $(EN_i)$, each of which contains an assignment between a first point in time $(t_i')$ and a second point in time $(t_i'')$.

**3.** Display or projection device according to any one of the claims 1 to 2, **characterized in that** the illumination element (8) comprises at least one light-emitting or laser diode, preferably three light-emitting or laser diodes with different primary colors.

**4.** Display or projection device according to any one of the claims 1 to 3, **characterized by** an optical system (10) arranged on the carrier, which forms a light pulse $(I_i)$ emitted by the illumination element (8) into a fan of light beams in a plane that is parallel to the axis of oscillation (17) of the mirror (9).

**5.** Display or projection device according to any one of the claims 1 to 4 for a video signal comprising at least two video channels $(BK_n)$, **characterized in that** the illumination modules (4) have a demultiplexer (19) upstream of them, which is configured to feed to each illumination module (4) components from different video channels $(BK_n)$ intended for this illumination module (4) in a specified sequence within a mirror period $(\tau)$.

**6.** Method for calibrating the display or projection device according to any one of the claims 1 to 5, comprising, for one of said illumination modules,

a) setting the mirror (9) in oscillation about an axis of oscillation (17) with a mirror period $(\tau)$;
b) feeding an electrical pulse $(E_i)$ into the input of the computing unit (18) at a known point in time $(t_{i,1})$ within a mirror period $(\tau)$;
c) measuring the path position $(x_i)$ of a light pulse $(I_i)$ on a path (16), the light pulse being emitted by the illumination unit (8) according to the electrical pulse $(E_i)$ and deflected from the mirror (9);
d) storing the known point in time $(t_{i,1})$, relative to the mirror period $(\tau)$, as a second point in time $(t_i'')$ in an entry $(EN_i)$ of an assignment table (26) implementing the mapping function (23) and storing a time value corresponding to the measured path position $(x_i)$, relative to the mirror period $(\tau)$ and a distance (d), as a first point in time $(t_i')$ of this entry $(EN_i)$;
e) repeating the steps b) - d), either individually or in their entire sequence, for at least one other electrical pulse $(E_i)$ at a further known point in time $(t_{i,1})$ that is different from the known points in time $(t_{i-1;1}, t_{i-2,1}, ...)$, relative to the mirror period $(\tau)$, of the preceding pulses $(E_{i-1}, E_{i-2}, ...)$,

to produce at least at least one further entry $(EN_i)$ of the assignment table (26);
f) determining, by means of the further computing unit (21), a scaling value $(s_{d1d2})$ and/or offset value $(o_{d1d2})$ for said illumination module (4) on the basis of its position $(\tilde{x})$ in the array and the given target distance $(d_2)$ corresponding to a desired viewing distance; and
g) receiving the scaling value $(s_{d1d2})$ and/or offset value $(o_{d1d2})$ at the control input (22) of the computing unit (18) for scaling or shifting, respectively, of the mapping function (23).

**7.** Method according to claim 6, **characterized in that** in step b) the pulse $(E_i)$ is fed repetitively over several mirror periods $(\tau)$, each at said known point in time $(t_{i,1})$ relative to the respective mirror period $(\tau)$.

**8.** Method according to claim 6 or 7, **characterized in that** further entries $(EN_i)$ in the assignment table (26) are added by interpolating existing entries.

**9.** Method according to any one of the claims 6 to 8, **characterized in that** the known points in time $(t_{i,1})$ of the pulses $(E_i)$ that are fed are spaced apart from one another in time according to the sampling period of the video signal (11) and cover a mirror period $(\tau)$.

**10.** Method according to any one of the claims 6 to 8, **characterized in that** the known points in time $(t_{i,1})$ of the pulses $(E_i)$ fed within a mirror period $(\tau)$ are spaced apart from one another in time according to a multiple of the sampling period of the video signal (11), and the method is repeated while varying the known points in time $(t_{i,1})$ until they cover the mirror period $(\tau)$ corresponding to the sampling rate of the video signal (11).

**11.** Method according to any one of the claims 6 to 10, **characterized in that** the measurement of the path position $(x_i)$ in step c) is performed by projecting the light pulse $(I_i)$ onto a screen (31) and measuring on the screen (31) with respect to a path running approximately horizontally (16).

**12.** Method according to any one of the claims 6 to 10, **characterized in that** the measurement of the position $(x_i)$ in step c) is performed by moving a light detector (33) along the path (16) and measuring the detection place $(P_i)$ of the light pulse $(I_i)$ on the path (16).

**13.** Method according to claim 12, **characterized in that** the light detector (33) is a camera, by means of which a picture $(B_i)$ of all illumination modules (4) is taken at successive places and times along the path (16), in which picture the light pulses $(I_i)$ of the illumination modules (4) are detected to calibrate each illumination module (4) in the mentioned way.

**14.** Method according to claim 12 or 13, **characterized in that** the path (16) is referenced by means of at least one reference illumination module (35) emitting light pulses ($I_{i,o}$) of known position to them.

**15.** Method according to any one of the claims 12 to 14, **characterized in that** the speed and/or acceleration of the camera (33) along the path (16) is determined by comparing its pictures ($B_i$) with pictures of a further camera (36), which is mounted at the first-mentioned camera (33) in a fixed distance ($d_R$).

**16.** Method according to any one of the claims 12 to 15, **characterized in that** the path (16) is determined by means of an inertial sensor (41) and/or a satellite navigation device (38) of the light detector (33).

## Revendications

**1.** Dispositif d'affichage ou de projection avec une multiplicité de modules de lumière qui sont agencés en un réseau, pour l'affichage ou la projection d'un signal vidéo, dans lequel les modules de lumière comprennent chacun :

un support (7),
au moins un miroir (9) logé sur le support, qui peut être placé périodiquement en oscillation autour d'un axe d'oscillation (17), lequel peut être commandé au moyen d'un signal de commande (14),
au moins un élément lumineux (8) agencé sur le support (7), orienté vers le miroir (9) et pouvant être commandé par l'intermédiaire d'une entrée, et
une unité de calcul (18) avec au moins une entrée et une sortie qui est reliée avec l'entrée de l'élément lumineux (8),
dans lequel l'unité de calcul (18) est conçue pour dépenser, en tant que valeur d'échantillonnage à sa sortie, au moins une valeur d'échantillonnage du signal vidéo (11) se produisant à son entrée à un premier instant ($t_{i,1}$) pendant une période ($\tau$) du miroir (9) selon une fonction de représentation (23) stockée dans l'unité de calcul (18) à un deuxième instant ($t_{i,2}$) différent du premier pendant la même période ($\tau$),

**caractérisé en ce**

**que** l'unité de calcul (18) possède une entrée de commande (22), par laquelle la fonction de représentation (23) stockée peut être redimensionnée et/ou peut être modifiée par un décalage,

dans lequel est prévue une autre unité de calcul (21) commune aux modules lumineux (4) avec une entrée (28) et une multiplicité de sorties (29), parmi lesquelles chacune est reliée avec l'entrée de commande (22) de l'unité de calcul (18) d'un module lumineux (4), et
dans lequel l'autre unité de calcul (21) est conçue pour déterminer, pour chaque module lumineux (4), dépendant de sa position ($\tilde{x}$) dans le réseau et d'un éloignement de cible ($d_2$) correspondant à une distance d'observation souhaitée prédéfinie à son entrée (28), une valeur de redimensionnement ($s_{d1d2}$) et/ou une valeur de décalage ($o_{d1d2}$) et pour la/les donner sur la sortie (29) correspondante.

**2.** Dispositif d'affichage ou de projection selon la revendication 1, **caractérisé en ce que** la fonction de représentation (23) est mise en oeuvre par un tableau de correspondance (26) stocké dans l'unité de calcul (18) avec une multiplicité d'entrées ($EN_i$) qui contiennent chacune une correspondance entre un premier instant ($t_i'$) et un deuxième ($t_i''$) instant.

**3.** Dispositif d'affichage ou de projection selon l'une des revendications 1 à 2, **caractérisé en ce que** l'élément lumineux (8) comprend au moins une diode luminescente ou laser, de préférence trois diodes luminescentes ou laser avec des couleurs primaires différentes.

**4.** Dispositif d'affichage ou de projection selon l'une des revendications 1 à 3, **caractérisé par** un système optique (10) agencé sur le support, lequel transforme une impulsion de lumière ($I_i$) émise par l'élément lumineux (8) en une lame de lumière dans un plan parallèle à l'axe d'oscillation (17) du miroir (9).

**5.** Dispositif d'affichage ou de projection selon l'une des revendications 1 à 4, pour un signal vidéo qui comprend au moins deux canaux d'image ($BK_n$), **caractérisé en ce qu'**un démultiplexeur (19) est monté en amont des modules lumineux (4), lequel est conçu pour alimenter, pendant une période ($\tau$) du miroir, à chaque module lumineux (4) des parties de différents canaux d'images ($BK_n$) destinées pour ce module lumineux en une séquence prédéfinie.

**6.** Procédé d'étalonnage d'un dispositif d'affichage ou de projection selon l'une des revendications 1 à 5, comprenant, pour l'un desdits modules lumineux,

a) la mise en oscillation du miroir (9) autour d'un axe d'oscillation (17) avec une période ($\tau$) du miroir ;
b) l'introduction d'une impulsion électrique ($E_i$) à un instant ($t_{i,1}$) connu pendant la période ($\tau$) du miroir dans l'entrée de l'unité de calcul (18) ;

c) la mesure de la position trajectoire ($x_i$) d'une impulsion de lumière ($I_i$) émise par l'unité lumineuse (8) en fonction de l'impulsion électrique ($E_i$) et diffractée par le miroir (9) sur une trajectoire (16) ;

d) le stockage de l'instant ($t_{i,1}$) connu, par rapport à la période ($\tau$) du miroir, en tant que deuxième instant ($t_i''$) dans une entrée ($EN_i$) d'un tableau de correspondance (26) mettant en oeuvre la fonction de représentation (23) et le stockage d'un instant correspondant à la position trajectoire ($x_i$) mesurée, par rapport à la période ($\tau$) du miroir et une distance ($d$), en tant que premier instant ($t_i'$) de cette entrée ($EN_i$) ;

e) la répétition des étapes b) à d), soit chacune isolément, soit dans leur suite globale, pour au moins une autre impulsion électrique ($E_i$) à un autre instant ($t_{i,1}$) connu qui est différente des instants ($t_{i-1}$, $t_{i-2,1}$,...) connus, par rapport à la période ($\tau$) du miroir, des impulsions ($E_{i-1}$, $E_{i-2}$, ...) précédentes, afin de générer au moins une autre entrée ($EN_i$) du tableau de correspondance (26).

f) la détermination, au moyen de l'autre unité de calcul (21), d'une valeur d'étalonnage ($s_{d1d2}$) et/ou de décalage ($o_{d1d2}$) pour ledit module lumineux (4) dépendant de sa position ($\tilde{x}$) dans le réseau et de l'éloignement de cible ($d_2$) prédéfinie correspondant à une distance d'observation souhaitée ; et

g) la réception d'une valeur d'étalonnage ($s_{d1d2}$) et/ou de décalage ($o_{d1d2}$) à l'entrée de commande (22) de l'unité de calcul (18) pour l'étalonnage, respectivement, le déplacement, de la fonction de représentation (23).

7. Procédé selon la revendication 6, **caractérisé en ce que**, dans l'étape b), l'impulsion ($E_i$) est introduite de manière répétitive sur plusieurs périodes ($\tau$) du miroir chaque fois à dudit instant ($t_{i,1}$) connu par rapport à la période ($\tau$) respective du miroir.

8. Procédé selon la revendication 6 ou 7, **caractérisé en ce que** d'autres entrées ($EN_i$) dans le tableau de correspondance (26) sont ajoutées par une interpolation d'entrées existantes.

9. Procédé selon l'une des revendications 6 à 8, **caractérisé en ce que** les instants ($t_{i,1}$) connus des impulsions ($E_i$) introduites sont espacés dans le temps les uns des autres selon la période d'échantillonnage du signal vidéo (11) et recouvrent une période ($\tau$) de miroir.

10. Procédé selon l'une des revendications 6 à 8, **caractérisé en ce que** les instants ($t_{i,1}$) connus des impulsions ($E_i$) stockées sont espacés dans le temps les uns des autres pendant une période ($\tau$) du miroir

en fonction d'une multiplicité de la période d'échantillage du signal vidéo (11), et que le procédé est répété moyennant la variation des instants ($t_{i,1}$) connus, jusqu'à ce que ceux-ci recouvrent la période ($\tau$) du miroir selon le taux d'échantillonnage du signal vidéo (11).

11. Procédé selon l'une des revendications 6 à 10, **caractérisé en ce que** la mesure de la position trajectoire ($x_i$) dans l'étape c) est réalisée par une projection de l'impulsion de lumière ($I_i$) sur un écran (31) et la mesure en fonction d'une trajectoire (16) s'étendant à peu près horizontalement sur l'écran (31).

12. Procédé selon l'une des revendications 6 à 10, **caractérisé en ce que** la mesure de la position ($x_i$) dans l'étape c) est réalisée par un déplacement d'un détecteur de lumière (33) le long de la trajectoire (16) et la mesure du lieu de détection ($P_i$) de l'impulsion de lumière ($I_i$) sur la trajectoire (16).

13. Procédé selon la revendication 12, **caractérisé en ce que** le détecteur de lumière (33) est une caméra, au moyen de laquelle, chaque fois, une image ($B_i$) de tous les modules lumineux (4) est prise à des lieux et à des instants se succédant le long de la trajectoire (16), dans laquelle image les impulsions de lumière ($I_i$) des modules lumineux (4) sont détectées, afin d'étalonner chaque module lumineux (4) de la manière citée.

14. Procédé selon la revendication 12 ou 13, **caractérisé en ce que** la trajectoire (16) est référencée au moyen d'au moins un module lumineux de référence (35) qui émet des impulsions de lumière ($I_{1,0}$) de position connue, sur celle-ci.

15. Procédé selon l'une des revendications 12 à 14, **caractérisé en ce que** la vitesse et/ou l'accélération de la caméra (33) le long de la trajectoire (16) est/sont déterminée(s) par une comparaison de leurs images ($B_i$) avec les images d'une autre caméra (36) qui est montée à une distance fixe ($d_R$) à la caméra (33) citée en premier lieu.

16. Procédé selon l'une des revendications 12 à 15, **caractérisé en ce que** la trajectoire (16) est déterminée au moyen d'un capteur d'inertie (41) et/ou d'un équipement de navigation par satellite (38) du détecteur de lumière (33).

**Fig. 1**

**Fig. 2**

**Fig. 3**

**Fig. 4**

**Fig. 5**

**Fig. 6**

*Fig. 7*

*Fig. 8*

*Fig. 9*

**Fig. 10**

**Fig. 11**

**Fig. 12**

**Fig. 13**

Fig. 14

Fig. 15

Fig. 16

**EP 2 858 358 B1**

**IN DER BESCHREIBUNG AUFGEFÜHRTE DOKUMENTE**

**In der Beschreibung aufgeführte Patentdokumente**

- US 20040119004 A1
- US 20090315925 A1
- US 20100283413 A1